# EUROPEAN PATENT APPLICATION

(11) **EP 4 333 490 A1**
(43) Date of publication of application: **06.03.2024**
(21) Application number: 22794431.1
(22) Date of filing: 23.03.2022
(51) Int. Cl.: H04W 24/10

(54) **COMMUNICATION METHOD AND APPARATUS FOR ACQUIRING LOAD INFORMATION**

(30) Priority: 29.04.2021 CN 202110476888
(71) Applicant: Huawei Technologies Co., Ltd., Shenzhen, Guangdong 518129 (CN)
(72) Inventor: YANG, Shuigen, Shenzhen, Guangdong 518129 (CN); JIN, Yinghao, Shenzhen, Guangdong 518129 (CN); ZHANG, Hongzhuo, Shenzhen, Guangdong 518129 (CN)
(74) Representative: Huawei European IPR
(86) International application number: PCT/CN2022/082599
(87) International publication number: WO 2022/227955

(57) **Abstract**

This application provides a communication method and apparatus for obtaining load information. The method includes: A second access network device determines first load information and sends the first load information to a first access network device. Correspondingly, the first access network device receives the first load information, and uses the first load information. For example, the first access network device determines, based on the first load information, whether to perform an energy saving operation or load balancing. The first load information indicates load that is in a cell of the second access network device and that is associated with a first-type terminal device, the first-type terminal device has a capability of accessing the first access network device and the second access network device, and the first access network device and the second access network device belong to different systems. The first access network device may be an access network device in a 5G system, and the second access network device is an access network device in a 4G system. This application may be applied to an intersystem scenario, so that an access network device in a first system can perform more precise management, thereby improving communication performance and user quality of service.

## Description

This application claims priority to Chinese Patent Application No. 202110476888.6, filed with the China National Intellectual Property Administration on April 29, 2021 and entitled "COMMUNICATION METHOD AND APPARATUS FOR OBTAINING LOAD INFORMATION", which is incorporated herein by reference in its entirety.

### TECHNICAL FIELD

This application relates to the communication field, and in particular, to a communication method and apparatus for obtaining load information.

### BACKGROUND

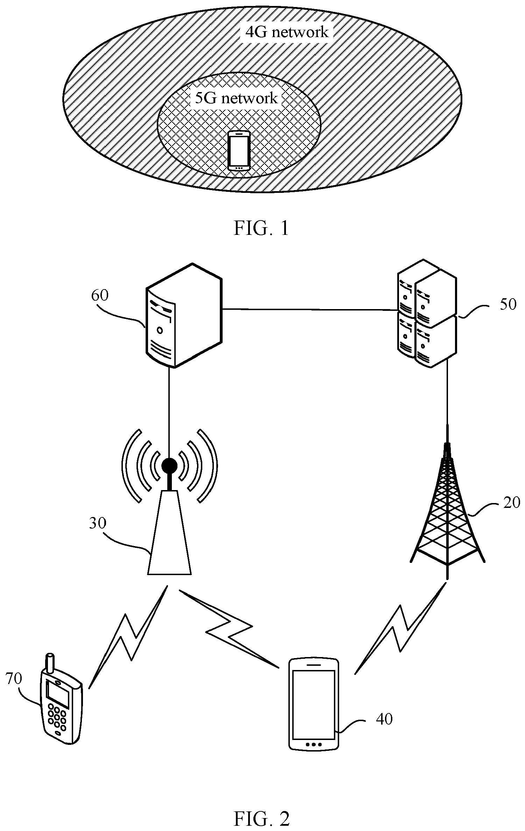

In a wireless communication network, a deployment manner of an inter-system usually exists. For example, FIG. 1 shows a common deployment manner of an inter-system. The inter-system includes a 4th generation (4th generation, 4G) network and a 5th generation (5th generation, 5G) network. The 4G network is well deployed, has wide coverage, and is responsible for providing basic coverage, so that a terminal device can access the wireless communication network anytime and anywhere to obtain required communication services. The 5G network has a large bandwidth, and is responsible for improving a capacity, so that the terminal device can obtain better user experience. In this system, how to obtain load information is a problem worth considering.

### SUMMARY

This application provides a communication method and apparatus for obtaining load information, to obtain load information.

According to a first aspect, a communication method is provided. The communication method includes: A first access network device receives first load information from a second access network device, and uses the first load information. The first load information indicates load that is in a cell of the second access network device and that is associated with a first-type terminal device. The first-type terminal device has a capability of accessing the first access network device and the second access network device. The first access network device and the second access network device belong to different systems.

The first access network device and the second access network device belong to different systems. For example, the first access network device belongs to a first system, the second access network device belongs to a second system, and the first system is different from the second system. The first access network device in the first system can obtain the load information that is in the cell of the second access network device and that is associated with the first-type terminal device. The first-type terminal has the capability of accessing the first access network device and the second access network device. In other words, the first access network device can obtain the load information associated with the terminal device that has the capability of accessing the first access network device. In this way, the first access network device can obtain the load information associated with the terminal device that has the capability of accessing the first access network device and the second access network device, so that the first access network device can perform more precise management by using the load information, thereby improving communication performance and user quality of service.

It should be noted that, for ease of description, in the following, the cell of the second access network device is referred to as a second cell, and a cell of the first access network device is referred to as a first cell.

With reference to the first aspect, in some possible designs, the first load information includes at least one of the following: a number of active first-type terminal devices, radio resource control RRC connections, a transport layer capacity indicator, a composite available capacity group, a slice available capacity, or a radio resource status.

The RRC connections may indicate an overall status of RRC connections. The transport layer capacity indicator may indicate a capacity provided by a transport network and/or an available capacity of a transport network. The composite available capacity group may indicate an available resource level. The slice available capacity may indicate a ratio of available resources of a network slice to total resources of a cell. The radio resource status may indicate physical resource block utilization.

In an implementation, in the cell of the second access network device, the radio resource control RRC connections are RRC connections associated with the first-type terminal devices, the transport layer capacity indicator is a transport layer capacity indicator associated with the first-type terminal device, the composite available capacity group is a composite available capacity group associated with the first-type terminal device, the slice available capacity is a slice available capacity associated with the first-type terminal device, or the radio resource status is a radio resource status associated with the first-type terminal device.

Based on this possible design, the first load information may include at least one of the foregoing items, so that the first load information is more specific and diversified, thereby improving flexibility of the solution. When the first load information includes the foregoing plurality of items, the first load information can provide a detailed load status, so that the first access network device obtains more abundant load information, thereby improving accuracy and reasonableness of performing management by the first access network device by using the load information.

With reference to the first aspect, in some possible designs, the communication method further includes: The first access network device sends first request information to the second access network device, where the first request information is used to request the second access network device to send load information.

Based on this possible design, the second access network device may send the load information based on a request of the first access network device, to prevent the first access network device from frequently sending the load information, so that signaling overheads are reduced.

With reference to the first aspect, in some possible designs, the first request information includes at least one of the following: a load type, periodicity information, or information about a threshold that corresponds to the load information, where the periodicity information indicates a periodicity in which the second access network device sends the load information, and the load indicated by the load information is greater than or equal to the threshold.

Based on this possible design, the first access network device may indicate the reporting load type, the reporting periodicity, or the reporting threshold based on a requirement of the first access network device, to implement more precise collection, and prevent the second access network device from sending load information that is useless to the first access network device, so that signaling overheads are reduced.

With reference to the first aspect, in some possible designs, the first-type terminal device is a terminal device that meets a handover condition in the cell of the second access network device. The handover condition may be a handover condition for a handover to the first access network device.

Based on this possible design, the first load information includes the load associated with the terminal device that meets the handover condition, so that a range of the load information is narrowed, and more precise load information is provided for the first access network device, thereby further improving accuracy of performing management by the first access network device based on the load information.

With reference to the first aspect, in some possible designs, the communication method further includes: The first access network device measures a sounding reference signal SRS sent by the first-type terminal device, to obtain an SRS measurement result, and sends the SRS measurement result to the second access network device.

Based on this possible design, the SRS measurement result obtained by the first access network device can reflect quality of a link between the first-type terminal and the first access network device, and the terminal device that can be handed over to the first cell may be determined based on the link quality. That is, this can help the second access network device determine the terminal device that is in the second cell and that can be handed over to the first cell.

With reference to the first aspect, in some possible designs, the communication method further includes: The first access network device receives second request information from the second access network device, where the second request information is used to request SRS configuration information. The first access network device sends the SRS configuration information to the second access network device.

Based on this possible design, after receiving the SRS configuration information, the second access network device can send the SRS configuration information to the first-type terminal device, so that the first-type terminal device sends the SRS based on the SRS configuration information, and the first access network device measures the SRS to obtain the SRS measurement result.

With reference to the first aspect, in some possible designs, that the first access network device uses the first load information includes: The first access network device determines, based on the first load information, whether to perform load balancing.

Based on this possible design, the first load information can indicate the load that is in the cell of the second access network device and that is associated with the first-type terminal device, so that the first access network device can perform more precise and effective load balancing based on the first load information, thereby improving communication performance and user quality of service.

With reference to the first aspect, in some possible designs, that the first access network device determines, based on the first load information, whether to perform load balancing includes: The first access network device determines, based on the first load information, whether to perform load balancing on a cell of the first access network device.

Based on this possible design, quality of service of a first-type terminal device in the first cell can be improved. For example, when the load that is in the second cell and that is associated with the first-type terminal device is light, and load in the first cell is heavy, a part of the load in the first cell may be balanced to the second cell, so that quality of service of the first-type terminal device in the first cell is improved.

With reference to the first aspect, in some possible designs, the performing load balancing on a cell of the first access network device includes: initiating a handover of a first-type terminal device in the cell of the first access network device, and/or requesting to adjust a handover parameter and/or a reselection parameter of the cell of the second access network device.

Based on this possible design, when the load of the first cell is heavy, the first-type terminal device in the first cell is handed over to the second cell, so that the load of the first cell can be reduced. Alternatively, the handover parameter and/or the reselection parameter of the second cell are/is adjusted, so that the first-type terminal device in the first cell can be more easily handed over or reselected to the second cell, thereby reducing the load of the first cell.

With reference to the first aspect, in some possible designs, that the first access network device uses the first load information includes: The first access network device determines, based on the first load information, whether to perform an energy saving operation.

Based on this possible design, the first load information can indicate the load that is in the cell of the second access network device and that is associated with the first-type terminal device, so that the first access network device can perform the more precise and effective energy saving operation based on the first load information, thereby reducing energy consumption of a wireless communication network.

With reference to the first aspect, in some possible designs, that the first access network device determines, based on the first load information, whether to perform an energy saving operation includes: The first access network device determines, based on the first load information, whether to switch on or switch off the cell of the first access network device.

With reference to the first aspect, in some possible designs, that the first access network device determines, based on the first load information, whether to switch on or switch off the cell of the first access network device includes: The first access network device determines, when the load indicated by the first load information is greater than or equal to a first threshold, to switch on the cell of the first access network device; or the first access network device determines, when the load indicated by the first load information is less than or equal to a second threshold, to switch off the cell of the first access network device.

Based on the foregoing two possible designs, when the load indicated by the first load information is greater than or equal to the first threshold, the load of the second cell may be heavy. In this case, the first access network device may switch on the first cell, so that the first-type terminal device in the second cell can be handed over to the first cell. With the heavy load, energy consumption used when one cell bears the load may be greater than total energy consumption used when two cells bear the load. Therefore, total energy consumption of a wireless communication network may be reduced after the first cell is switched on. In addition, when the load indicated by the first load information is less than the second threshold, the load of the second cell may be light, and the second access network device may be able to provide good quality of service. If the first cell is still kept in a switch-on state in this case, energy consumption of the first access network device may be wasted. Therefore, the first cell may be switched off to reduce the energy consumption of the first access network device.

With reference to the first aspect, in some possible designs, the communication method further includes: The first access network device receives second load information, where the second load information indicates load that is in a cell of a third access network device and that is associated with the first-type terminal device. That the first access network device determines, based on the first load information, whether to switch on or switch off the cell of the first access network device includes: When a sum of the load indicated by the first load information and the load indicated by the second load information is greater than or equal to a third threshold, the first access network device determines to switch on the cell of the first access network device; or when a sum of the load indicated by the first load information and the load indicated by the second load information is less than or equal to a fourth threshold, the first access network device determines to switch off the cell of the first access network device.

Based on this possible design, the first access network device can determine, with reference to load that is in the plurality of cells and that is associated with the first-type terminal device, whether to perform the energy saving operation or load balancing.

With reference to the first aspect, in some possible designs, the first load information and the second load information are load information received by the first access network device in a first time period.

Based on this possible design, the first access network device can be prevented from waiting to unlimitedly receive the load information, and therefore, a latency of the energy saving operation or load balancing is increased.

With reference to the first aspect, in some possible designs, the first access network device is an access network device in a 5G system, and the second access network device is an access network device in a 4G system. That the first access network device is an access network device in a 5G system includes: The first access network device is an access network device that accesses a 5G core network. That the second access network device is an access network device in a 4G system includes: The second access network device is an access network device that accesses a 4G core network.

According to a second aspect, a communication method is provided. The communication method includes: A second access network device determines first load information and sends the first load information to a first access network device. The first load information indicates load that is in a cell of the second access network device and that is associated with a first-type terminal device, the first-type terminal device has a capability of accessing the first access network device and the second access network device, and the first access network device and the second access network device belong to different systems. For technical effects achieved by the second aspect, refer to technical effects achieved by the foregoing first aspect. Details are not described herein again.

With reference to the second aspect, in some possible designs, the first load information includes at least one of the following: a number of active first-type terminal devices, radio resource control RRC connections, a transport layer capacity indicator, a composite available capacity group, a slice available capacity, or a radio resource status.

The RRC connections may indicate an overall status of RRC connections. The transport layer capacity indicator may indicate a capacity provided by a transport network and/or an available capacity of a transport network. The composite available capacity group may indicate an available resource level. The slice available capacity may indicate a ratio of available resources of a network slice to total resources of a cell. The radio resource status may indicate physical resource block utilization.

In an implementation, in the cell of the second access network device, the radio resource control RRC connections are RRC connections associated with the first-type terminal devices, the transport layer capacity indicator is a transport layer capacity indicator associated with the first-type terminal device, the composite available capacity group is a composite available capacity group associated with the first-type terminal device, the slice available capacity is a slice available capacity associated with the first-type terminal device, or the radio resource status is a radio resource status associated with the first-type terminal device.

With reference to the second aspect, in some possible designs, the communication method further includes: The second access network device receives first request information from the first access network device, where the first request information is used to request the second access network device to send load information.

With reference to the second aspect, in some possible designs, the first request information includes at least one of the following: a load type, periodicity information, or information about a threshold that corresponds to the load information, where the periodicity information indicates a periodicity in which the second access network device sends the load information, and the load indicated by the load information is greater than or equal to the threshold.

With reference to the second aspect, in some possible designs, the first-type terminal device is a terminal device that meets a handover condition in the cell of the second access network device.

With reference to the second aspect, in some possible designs, the communication method further includes: The second access network device receives a sounding reference signal SRS measurement result from the first access network device, and the first load information is determined based on the SRS measurement result.

With reference to the second aspect, in some possible designs, the communication method further includes: The second access network device sends second request information to the first access network device, where the second request information is used to request SRS configuration information. The second access network device receives the SRS configuration information from the first access network device, and sends the SRS configuration information to the first-type terminal device.

With reference to the second aspect, in some possible designs, the communication method further includes: The second access network device receives first information from the first-type terminal device, where the first information indicates coverage and/or quality information of a cell of the first access network device; and the first load information is determined based on the first information.

With reference to the second aspect, in some possible designs, the first load information is determined based on second information, and the second information indicates coverage and/or quality information of the cell of the second access network device.

For technical effects achieved by any possible design of the second aspect, refer to technical effects achieved by corresponding designs of the first aspect. Details are not described herein again.

According to a third aspect, a communication method is provided. The communication method includes: A terminal device determines the first information and sends the first information to a second access network device. The first information indicates coverage and/or quality information of a cell of a first access network device. The first access network device and the second access network device belong to different systems, and the terminal device has a capability of accessing the first access network device and the second access network device.

Based on this solution, the terminal device sends the first information to the second access network device, so that the second access network device can know the coverage and/or quality information of the first cell, to determine a terminal device that can be handed over to the first cell, determine load information that is in a second cell and that is associated with the terminal device that can be handed over to the first cell, and send the load information to the first access network device.

With reference to the third aspect, in some possible designs, the first information is determined based on location information of the terminal device.

With reference to the third aspect, in some possible designs, the method further includes: The terminal device receives third request information from the second access network device, where the third request information is used to request the first information. Based on this possible design, the terminal device can send the first information based on a request of the second access network device.

In an implementation, the terminal device in any one of the third aspect and the possible designs of the third aspect is a first-type terminal device.

According to a fourth aspect, a communication apparatus is provided, to implement the foregoing method. The communication apparatus may be the first access network device in the first aspect, or an apparatus including the first access network device, or an apparatus included in the first access network device, for example, a chip; or the communication apparatus may be the second access network device in the second aspect, or an apparatus including the second access network device, or an apparatus included in the second access network device, for example, a chip; or the communication apparatus may be the terminal device in the third aspect, or an apparatus including the terminal device, or an apparatus included in the terminal device, for example, a chip. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

In some possible designs, the communication apparatus may include a processing module. Further, the communication apparatus may further include a sending module and/or a receiving module. The sending module may be configured to implement a sending-type function in any one of the foregoing aspects and any one of the possible implementations of the foregoing aspects. The receiving module may be configured to implement a receiving-type function in any one of the foregoing aspects and any one of the possible implementations of the foregoing aspects. The processing module may be configured to implement a processing-type function in any one of the foregoing aspects and any one of the possible implementations of the foregoing aspects.

In some possible designs, when the communication apparatus is configured to implement a function of the foregoing first access network device, the receiving module is configured to receive first load information from a second access network device, where the first load information indicates load that is in a cell of the second access network device and that is associated with a first-type terminal device; the first-type terminal device has a capability of accessing the communication apparatus and the second access network device; and the communication apparatus and the second access network device belong to different systems; and the processing module is configured to use the first load information.

In a possible implementation, the sending module is further configured to send first request information to the second access network device, where the first request information is used to request the second access network device to send load information.

In a possible implementation, the processing module is further configured to measure a sounding reference signal SRS sent by the first-type terminal device, to obtain an SRS measurement result. The sending module is further configured to send the SRS measurement result to the second access network device.

In a possible implementation, the receiving module is further configured to receive second request information from the second access network device, where the second request information is used to request SRS configuration information. The sending module is further configured to send the SRS configuration information to the second access network device.

In a possible implementation, that the processing module is configured to use the first load information includes: The processing module is configured to determine, based on the first load information, whether to perform load balancing.

In a possible implementation, that the processing module is configured to determine, based on the first load information, whether to perform load balancing includes: The processing module is configured to determine, based on the first load information, whether to perform load balancing on a cell of a first communication apparatus.

In a possible implementation, that the processing module is configured to perform load balancing on a cell of a first communication apparatus includes: In a possible implementation, the processing module is configured to initiate a handover of a first-type terminal device in the cell of the first communication apparatus, and/or the processing module is configured to request to adjust a handover parameter and/or a reselection parameter of the cell of the second access network device.

In a possible implementation, that the processing module is configured to use the first load information includes: The processing module is configured to determine, based on the first load information, whether to perform an energy saving operation.

In a possible implementation, that the processing module is configured to determine, based on the first load information, whether to perform an energy saving operation includes: The processing module is configured to determine, based on the first load information, whether to switch on or switch off the cell of the first communication apparatus.

In a possible implementation, that the processing module is configured to determine, based on the first load information, whether to switch on or switch off the cell of the first communication apparatus includes: The processing module is configured to determine, when the load indicated by the first load information is greater than or equal to a first threshold, to switch on the cell of the first communication apparatus; or the processing module is configured to determine, when the load indicated by the first load information is less than or equal to a second threshold, to switch off the cell of the first communication apparatus.

In a possible implementation, the receiving module is further configured to receive second load information, where the second load information indicates load that is in a cell of a third access network device and that is associated with the first-type terminal device. That the processing module is configured to determine, based on the first load information, whether to switch on or switch off the cell of the first communication apparatus includes: The processing module is configured to: when a sum of the load indicated by the first load information and the load indicated by the second load information is greater than or equal to a third threshold, determine to switch on the cell of the first communication apparatus; or the processing module is configured to: when a sum of the load indicated by the first load information and the load indicated by the second load information is less than or equal to a fourth threshold, determine to switch off the cell of the first communication apparatus.

In some possible designs, when the communication apparatus is configured to implement a function of a second communication apparatus, the processing module is configured to determine first load information, where the first load information indicates load that is in a cell of the second communication apparatus and that is associated with a first-type terminal device; the first-type terminal device has a capability of accessing a first access network device and the communication apparatus; and the first access network device and the communication apparatus belong to different systems; and the sending module is configured to send the first load information to the first access network device.

In a possible implementation, the receiving module is further configured to receive first request information from the first access network device, where the first request information is used to request the second communication apparatus to send load information.

In a possible implementation, the receiving module is further configured to receive a sounding reference signal SRS measurement result from the first access network device, and the first load information is determined based on the SRS measurement result.

In a possible implementation, the sending module is further configured to send second request information to the first access network device, where the second request information is used to request SRS configuration information. The receiving module is further configured to receive the SRS configuration information from the first access network device. The sending module is further configured to send the SRS configuration information to the first-type terminal device.

In a possible implementation, the receiving module is further configured to receive first information from the first-type terminal device, where the first information indicates coverage and/or quality information of a cell of the first access network device; and the first load information is determined based on the first information.

In some possible designs, when the communication apparatus is configured to implement a function of the foregoing terminal device, the processing module is configured to determine first information, where the first information indicates coverage and/or quality information of a cell of the first access network device; and the sending module is configured to send the first information to the second access network device, where the first access network device and the second access network device belong to different systems, and the communication apparatus has a capability of accessing the first access network device and the second access network device.

In a possible implementation, the receiving module is configured to receive third request information from the second access network device, where the third request information is used to request the first information.

According to a fifth aspect, a communication apparatus is provided, including: a processor and a memory. The memory is configured to store computer instructions, and when the processor executes the instructions, the communication apparatus is enabled to perform the method according to any one of the foregoing aspects. The communication apparatus may be the first access network device in the first aspect, or an apparatus including the first access network device, or an apparatus included in the first access network device, for example, a chip; or the communication apparatus may be the second access network device in the second aspect, or an apparatus including the second access network device, or an apparatus included in the second access network device, for example, a chip; or the communication apparatus may be the terminal device in the third aspect, or an apparatus including the terminal device, or an apparatus included in the terminal device, for example, a chip.

According to a sixth aspect, a communication apparatus is provided, including: a processor and a communication interface. The communication interface is configured to communicate with a module other than the communication apparatus. The processor is configured to execute a computer program or instructions, so that the communication apparatus performs the method according to any one of the foregoing aspects. The communication apparatus may be the first access network device in the first aspect, or an apparatus including the first access network device, or an apparatus included in the first access network device, for example, a chip; or the communication apparatus may be the second access network device in the second aspect, or an apparatus including the second access network device, or an apparatus included in the second access network device, for example, a chip; or the communication apparatus may be the terminal device in the third aspect, or an apparatus including the terminal device, or an apparatus included in the terminal device, for example, a chip.

According to a seventh aspect, a communication apparatus is provided, including: a logic circuit and an interface circuit. The interface circuit is configured to input information and/or output information. The logic circuit is configured to perform the method according to any one of the foregoing aspects, to process input information and/or generate output information. The communication apparatus may be the first access network device in the first aspect, or an apparatus including the first access network device, or an apparatus included in the first access network device, for example, a chip; or the communication apparatus may be the second access network device in the second aspect, or an apparatus including the second access network device, or an apparatus included in the second access network device, for example, a chip; or the communication apparatus may be the terminal device in the third aspect, or an apparatus including the terminal device, or an apparatus included in the terminal device, for example, a chip.

With reference to the seventh aspect, in an implementation of the seventh aspect, when the communication apparatus is configured to implement a function of the foregoing first access network device, in some possible designs, the input information is first load information, and the first load information indicates load that is in a cell of a second access network device and that is associated with a first-type terminal device. The processing input information includes: using the first load information.

In some possible designs, the output information is first request information, and the first request information is used to request the second access network device to send load information.

In some possible designs, the output information is an SRS measurement result, and the SRS measurement result is obtained by measuring an SRS sent by the first-type terminal device.

In some possible designs, the input information is second request information, and the second request information is used to request SRS configuration information.

With reference to the seventh aspect, in an implementation of the seventh aspect, when the communication apparatus is configured to implement a function of the foregoing second access network device, in some possible designs, the output information is first load information, and the first load information indicates load that is in a cell of a second access network device and that is associated with a first-type terminal device.

In some possible designs, the input information is first request information, and the first request information is used to request the second access network device to send load information.

In some possible designs, the input information is an SRS measurement result. The processing input information includes: determining first load information based on the SRS measurement result.

In some possible designs, the output information is second request information, and the second request information is used to request SRS configuration information.

In some possible designs, the input information is first information, and the first information indicates coverage and/or quality information of a cell of the first access network device. The processing input information includes: determining first load information based on the first information.

With reference to the seventh aspect, in an implementation of the seventh aspect, when the communication apparatus is configured to implement a function of the foregoing terminal device, in some possible designs, the output information is first information, and the first information indicates coverage and/or quality information of a cell of the first access network device.

In some possible designs, the input information is third request information, and the third request information is used to request the first information.

According to an eighth aspect, a communication apparatus is provided, including: an interface circuit and a processor. The interface circuit is a code/data read/write interface circuit, and the interface circuit is configured to: receive computer-executable instructions (where the computer-executable instructions are stored in a memory, and may be directly read from the memory, or may be read via another device) and transmit the computer-executable instructions to the processor. The processor is configured to execute the computer-executable instructions, so that the communication apparatus performs the method according to any one of the foregoing aspects. The communication apparatus may be the first access network device in the first aspect, or an apparatus including the first access network device, or an apparatus included in the first access network device, for example, a chip; or the communication apparatus may be the second access network device in the second aspect, or an apparatus including the second access network device, or an apparatus included in the second access network device, for example, a chip; or the communication apparatus may be the terminal device in the third aspect, or an apparatus including the terminal device, or an apparatus included in the terminal device, for example, a chip.

According to a ninth aspect, a communication apparatus is provided, including at least one processor. The processor is configured to execute a computer program or instructions, so that the communication apparatus performs the method according to any one of the foregoing aspects. The communication apparatus may be the first access network device in the first aspect, or an apparatus including the first access network device, or an apparatus included in the first access network device, for example, a chip; or the communication apparatus may be the second access network device in the second aspect, or an apparatus including the second access network device, or an apparatus included in the second access network device, for example, a chip; or the communication apparatus may be the terminal device in the third aspect, or an apparatus including the terminal device, or an apparatus included in the terminal device, for example, a chip.

In some possible designs, the communication apparatus includes a memory, and the memory is configured to store a necessary computer program or necessary instructions. The memory may be coupled to the processor, or may be independent of the processor.

In some possible designs, the communication apparatus may be a chip or a chip system. When the apparatus is the chip system, the chip system may include a chip, or may include a chip and another discrete device.

According to a tenth aspect, a computer-readable storage medium is provided. The computer-readable storage medium stores a computer program or instructions, and when the computer program or the instructions are executed by a processor, the method according to any one of the foregoing aspects is performed.

According to an eleventh aspect, a computer program product is provided. When the computer program product is executed by a processor, the method according to any one of the foregoing aspects is performed.

It may be understood that when the communication apparatus provided in any one of the fourth aspect to the eleventh aspect is the chip, the foregoing sending action/function may be understood as the output information, and the foregoing receiving action/function may be understood as the input information.

For technical effects achieved by any design manner in the fourth aspect to the eleventh aspect, refer to technical effects achieved by different design manners in the first aspect, the second aspect, or the third aspect. Details are not described herein again.

According to a twelfth aspect, a communication system is provided. The communication system includes the first access network device and the second access network device according to the foregoing aspects.

With reference to the twelfth aspect, in some possible designs, the communication system further includes the terminal device according to the foregoing aspects.

### BRIEF DESCRIPTION OF DRAWINGS

FIG. 1 is a schematic diagram of network deployment according to this application;
FIG. 2 is a schematic diagram of a structure of a communication system according to this application;
FIG. 3 is a schematic diagram of a structure of a communication apparatus according to this application;
FIG. 4 is a schematic flowchart of a communication method according to this application;
FIG. 5 is a schematic flowchart of a communication method according to this application;
FIG. 6 is a schematic diagram of distribution of cell coverage according to this application;
FIG. 7 is a schematic flowchart of a communication method according to this application;
FIG. 8 is a schematic flowchart of a communication method according to this application;
FIG. 9 is a schematic diagram of a structure of a first communication apparatus according to this application;
FIG. 10 is a schematic diagram of a structure of a second communication apparatus according to this application;
FIG. 11 is a schematic diagram of a structure of a third communication apparatus according to this application; and
FIG. 12 is a schematic diagram of a structure of a communication apparatus according to this application.

### DESCRIPTION OF EMBODIMENTS

The following describes technical solutions in embodiments of this application with reference to the accompanying drawings in embodiments of this application.

Unless otherwise specified, "/" in descriptions of this application represents an "or" relationship between associated objects. For example, A/B may represent A or B. In this application, "and/or" represents only an association relationship for describing associated objects, and represents that three relationships may exist. For example, A and/or B may represent the following three cases: Only A exists, both A and B exist, and only B exists, where A and B each may be singular or plural.

In the descriptions of this application, unless otherwise specified, "a plurality of" means two or more than two. "At least one of the following" or a similar expression thereof means any combination of these items, including any combination of a single item or a plurality of items. For example, at least one of a, b, or c may indicate a, b, c, a and b, a and c, b and c, or a, b, and c, where a, b, and c each may be singular or plural.

To clearly describe the technical solutions in embodiments of this application, terms such as "first" and "second" are used in embodiments of this application to distinguish between same items or similar items that have basically a same function or purpose. A person skilled in the art may understand that the terms such as "first" and "second" do not limit a quantity and an execution sequence, and the terms such as "first" and "second" do not indicate a definite difference. In addition, in embodiments of this application, the word such as "example" or "for example" is used to represent giving an example, an illustration, or a description. Any embodiment or design solution described as an "example" or "for example" in embodiments of this application should not be explained as being more preferred or having more advantages than another embodiment or design solution. Exactly, use of the word such as "example" or "for example" is intended to present a relative concept in a specific manner for ease of understanding.

It should be understood that, an "embodiment" mentioned throughout this specification means that particular features, structures, or characteristics related to the embodiment are included in at least one embodiment of this application. Therefore, embodiments in the entire specification do not necessarily refer to a same embodiment. In addition, these particular features, structures, or characteristics may be combined in one or more embodiments in any appropriate manner. It may be understood that sequence numbers of the processes do not mean an execution sequence in various embodiments of this application. The execution sequence of the processes should be determined based on functions and internal logic of the processes, and should not be construed as any limitation on implementation processes of embodiments of this application.

It may be understood that, in this application, "when" and "if" mean that corresponding processing is performed in an objective situation, are not intended to limit time, do not require a determining action during implementation, and do not mean any other limitation.

It may be understood that "predefine" in this application may be understood as "define", "predefine", "store", "pre-store", "pre-negotiate", "pre-configure", "solidify", or "pre-burn".

The correspondences shown in the tables in this application may be configured, or may be predefined. Values of the information in the tables are merely examples, and other values may be configured. This is not limited in this application. When a correspondence between information and each parameter is configured, not all correspondences shown in the tables need to be configured. For example, in the tables in this application, correspondences shown in some rows may alternatively not be configured. For another example, proper deformations and adjustments such as splitting and combination may be performed based on the foregoing tables. Names of the parameters shown in titles of the foregoing tables may alternatively be other names that can be understood by a communication apparatus, and values or representation manners of the parameters may alternatively be other values or representation manners that can be understood by the communication apparatus. During implementation of the foregoing tables, another data structure, such as an array, a queue, a container, a stack, a linear table, a pointer, a linked list, a tree, a graph, a structure, a class, a pile, a hash list, or a hash table, may alternatively be used.

It may be understood that, in some scenarios, some optional features in embodiments of this application may be independently implemented without depending on another feature, for example, a solution on which the optional features are currently based, to resolve a corresponding technical problem and achieve a corresponding effect. Alternatively, in some scenarios, the optional features are combined with other features based on requirements. Correspondingly, the apparatus provided in embodiments of this application may also correspondingly implement these features or functions. Details are not described herein.

In this application, unless otherwise specified, for same or similar parts of the embodiments, refer to each other. In embodiments of this application and the implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof. The following implementations of this application are not intended to limit the protection scope of this application.

The technical solutions in embodiments of this application may be applied to various communication systems. The communication system may be a 3rd generation partnership project (3rd generation partnership project, 3GPP) communication system, for example, a long term evolution (long term evolution, LTE) system; or may be a 5G mobile communication system, a new radio (new radio, NR) system, or a vehicle to everything (vehicle to everything, V2X) system. Alternatively, the technical solutions may be applied to an LTE and 5G hybrid networking system, or a device-to-device (device-to-device, D2D) communication system, a machine to machine (machine to machine, M2M) communication system, an internet of things (internet of things, IoT) system, and another next generation communication system; or may be applied to a non-3GPP communication system. This is not limited. In addition, the terms "system" and "network" are interchangeable.

The technical solutions in embodiments of this application may be applied to various communication scenarios, for example, may be applied to one or more of the following communication scenarios: communication scenarios such as enhanced mobile broadband (enhanced mobile broadband, eMBB), ultra-reliable low-latency communication (ultra-reliable low-latency communication, URLLC), machine type communication (machine type communication, MTC), massive machine-type communications (massive machine-type communications, mMTC), D2D, V2X, and IoT.

The foregoing communication systems and communication scenarios applicable to this application are merely examples for description, and communication systems and communication scenarios applicable to this application are not limited thereto. This is uniformly described herein. Details are not described herein again.

For example, FIG. 2 shows a communication system 10 according to an embodiment of this application. The communication system 10 may be an inter-system. For example, the inter-system may be a system including two or more core networks.

As shown in FIG. 2, the communication system 10 includes at least one first access network device 20, at least one second access network device 30, and at least one terminal device 40. The first access network device 20 and the second access network device 30 belong to different systems. That the first access network device 20 and the second access network device 30 belong to different systems may include: The first access network device 20 and the second access network device 30 access different core networks.

In an implementation, the first access network device 20 belongs to a first system, the second access network device 30 belongs to a second system, and the first system and the second system have different core networks. For example, the first system may be a new system relative to the second system. For example, the first system may be a 5G system, and the second system may be a 4G system; or the first system may be a 6th generation (6th generation, 6G) system, and the second system may be a 5G system, a 4G system, or the like. This is not specifically limited in this application. The 5G system is a 3GPP system including a 5G access network, a 5G core network, and a terminal device. The 4G system is also referred to as an evolved packet system (evolved packet system, EPS), and is a 3GPP system including an evolved packet core and an evolved radio access network.

Optionally, the terminal device 40 in this application is a first-type terminal device, and the first-type terminal device has a capability of accessing the first access network device 20 and the second access network device 30.

In an implementation, that the first-type terminal device has a capability of accessing the first access network device 20 and the second access network device 30 includes: The first-type terminal device has a capability of accessing a cell of the first access network device 20 and a cell of the second access network device 30.

In an example, the terminal device 40 can simultaneously communicate with the first access network device 20 and the second access network device 30, that is, perform multi-radio dual connectivity (multi-radio dual connectivity, MR-DC) communication. In an MR-DC scenario, the first access network device 20 may be a master access network device, and correspondingly, the second access network device 30 is a secondary access network device; or the second access network device 30 may be a master access network device, and correspondingly, the first access network device 20 is a secondary access network device.

Optionally, there may be a communication interface between the first access network device 20 and the second access network device 30, and the two may communicate with each other through the communication interface. Alternatively, there is no communication interface between the first access network device 20 and the second access network device 30, and the two communicate with each other through assistance or forwarding of another network node. For example, the first access network device 20 and the second access network device 30 may communicate with each other via a first core network device 50 and a second core network device 60.

In an implementation, the communication system 10 may further include the first core network device 50 and the second core network device 60. The first core network device 50 and the first access network device 20 belong to a same system, and can communicate with each other. For example, when the first access network device 20 and the first core network device 50 belong to the 5G system, the two may communicate with each other through an interface (for example, an NG interface). The second core network device 60 and the second access network device 30 belong to a same system, and can communicate with each other. For example, when the second access network device 30 and the second core network device 60 belong to the 4G system, the two may communicate with each other through an interface (for example, an S 1 interface). The first core network device 50 and the second core network device 60 can communicate with each other. For example, when the first core network device 50 belongs to the 5G system, and the second core network device 60 belongs to the 4G system, the two may communicate with each other through an interface (for example, an N26 interface).

Optionally, the communication system 10 may further include at least one terminal device 70. The terminal device 70 is a second-type terminal device, and the second-type terminal device has a capability of accessing the second access network device 30, but does not have a capability of accessing the first access network device 20.

In an implementation, that the second-type terminal device has a capability of accessing the second access network device 30, but does not have a capability of accessing the first access network device 20 includes: The second-type terminal device has a capability of accessing the cell of the second access network device 30, but does not have a capability of accessing the cell of the first access network device 20.

The terminal device 40 or the terminal device 70 in this application may also be referred to as user equipment (user equipment, UE), a terminal, an access terminal, a subscriber unit, a subscriber station, a mobile station, a remote station, a remote terminal, a mobile terminal, a user terminal, a wireless communication device, a user agent, a user apparatus, or the like. The terminal device may be, for example, a wireless terminal or a wired terminal in IoT, V2X, D2D, M2M, a 5G network, or a future evolved public land mobile network (public land mobile network, PLMN). The wireless terminal is a device having a wireless transceiver function. The wireless terminal may be deployed on land, including an indoor device, an outdoor device, a hand-held device, or an in-vehicle device; or may be deployed on a water surface (for example, on a ship); or may be deployed in air (for example, on a plane, a balloon, or a satellite).

For example, the terminal device 40 or the terminal device 70 may be an unmanned aerial vehicle, an IoT device (for example, a sensor, an electricity meter, or a water meter), a V2X device, a station (station, ST) in a wireless local area network (wireless local area network, WLAN), a cellular phone, a cordless phone, a session initiation protocol (session initiation protocol, SIP) phone, a wireless local loop (wireless local loop, WLL) station, a personal digital assistant (personal digital assistant, PDA) device, a handheld device with a wireless communication function, a computing device, another processing device connected to a wireless modem, an in-vehicle device, a wearable device (also referred to as a wearable smart device), a tablet computer, a computer with a wireless transceiver function, a virtual reality (virtual reality, VR) terminal, a wireless terminal in industrial control (industrial control), a wireless terminal in self driving, a wireless terminal in remote medical (remote medical), a wireless terminal in a smart grid (smart grid), a wireless terminal in transportation security (transportation safety), a wireless terminal in a smart city (smart city), a wireless terminal in a smart home (smart home), and an in-vehicle terminal, a vehicle with a vehicle-to-vehicle (vehicle-to-vehicle, V2V) communication capability, an intelligent connected vehicle, an unmanned aerial vehicle with an unmanned aerial vehicle to unmanned aerial vehicle (unmanned aerial vehicle to unmanned aerial vehicle, U2U) communication capability, or the like. The terminal may be mobile or fixed. This is not specifically limited in this application.

The first access network device 20 in this application is a device that enables a terminal device to access the first system (or a first network), and the second access network device 30 is a device that enables a terminal device to access the second system (or a second network). The first access network device 20 and the second access network device 30 can provide services such as radio resource management, quality of service management, and data encryption and compression for the terminal device.

For example, the first access network device 20 is a device that enables a terminal device to access the 5G system. For example, the first access network device 20 may be a next generation NodeB (next generation NodeB, gNodeB or gNB), provides control plane and/or user plane protocols and functions of NR for a terminal device, and enables the terminal device to access the 5G core network. Alternatively, the first access network device 20 may be a next generation evolved NodeB (next generation evolved NodeB, ng-eNB, or ng-eNodeB), provides control plane and/or user plane protocols and functions of evolved universal telecommunication radio access (evolved universal telecommunication radio access, E-UTRA) for a terminal device, and enables the terminal device to access the 5G core network.

For example, the second access network device 30 is a device that enables a terminal device to access the 4G system. For example, the second access network device 30 may be an en-gNB, provides control plane and/or user plane protocols and functions of NR for a terminal device, and enables the terminal device to access the 4G core network. Alternatively, the second access network device 30 may be an evolved NodeB (evolved NodeB, eNB or eNodeB), provides control plane and/or user plane protocols and functions of E-UTRA for a terminal device, and enables the terminal device to access the 4G core network.

In a possible implementation, the access network device in this application may alternatively be a central unit (central unit, CU) or a distributed unit (distributed unit, DU), or the access network device may include a CU and a DU. The CU and the DU may be connected through an interface, for example, an F1 interface. The CU and the DU may be obtained through division based on protocol layers of a wireless network. For example, functions of a radio resource control (radio resource control, RRC) protocol layer, a service data adaptation protocol (service data adaptation protocol, SDAP) protocol layer, and a packet data convergence protocol (packet data convergence protocol, PDCP) protocol layer are set in the CU, and functions of a radio link control (radio link control, RLC) protocol layer, a media access control (media access control, MAC) protocol layer, a physical (physical, PHY) protocol layer, and the like are set in the DU.

In an example, the CU may include a CU control plane (CU control plane, CU-CP) and a CU user plane (CU user plane, CU-UP). The CU-CP and the CU-UP may be obtained through division based on the protocol layers of the wireless network. For example, functions of the RRC protocol layer and a PDCP protocol layer corresponding to a signaling radio bearer (signaling radio bearer, SRB) are set in the CU-CP, and functions of a PDCP protocol layer corresponding to a data radio bearer (data radio bearer, DRB) are set in the CU-UP. In addition, functions of the SDAP protocol layer may alternatively be set in the CU-UP.

It may be understood that division into processing functions of the CU and the DU based on the protocol layers is merely an example, and there may be other division.

In some embodiments, the first core network device 50 in this application is a device in a core network of the first system. For example, the first system is a 5G system. The first core network device 50 may be a mobility management device responsible for access control and mobility management, for example, an access and mobility management function (access and mobility management function, AMF) network element in the 5G system. Alternatively, the first core network device 50 may be a data analysis device, for example, a network data analysis function (network data analytics function, NWDAF) network element in the 5G system. Certainly, the first core network device is not limited to the AMF network element and the NWDAF network element.

In some embodiments, the second core network device 60 in this application is a device in a core network of the second system. For example, the second system is a 4G system. The second core network device 60 may be a device responsible for access control and mobility management, for example, a mobility management entity (mobility management entity, MME) in the 4G system.

It should be noted that the communication system shown in FIG. 2 is intended to describe the technical solutions in embodiments of this application more clearly, and does not constitute a limitation on the technical solutions provided in embodiments of this application. A communication system applicable to this application is not limited thereto. A person of ordinary skill in the art may learn that the technical solutions provided in embodiments of this application are also applicable to a similar technical problem as a network architecture evolves and a new service scenario emerges.

In some embodiments, related functions of the terminal device, the access network device, and the core network device in this application may be implemented by one device, or may be implemented by a plurality of devices together, or may be implemented by one or more functional modules in one device, or may be implemented by one or more chips, a system on chip (system on chip, SOC), or a chip system. The chip system may include a chip, or may include a chip and another discrete device. This is not specifically limited in this embodiment of this application.

It may be understood that the foregoing function may be a network element in a hardware device, may be a software function running on dedicated hardware, a combination of hardware and software, or a virtualization function instantiated on a platform (for example, a cloud platform).

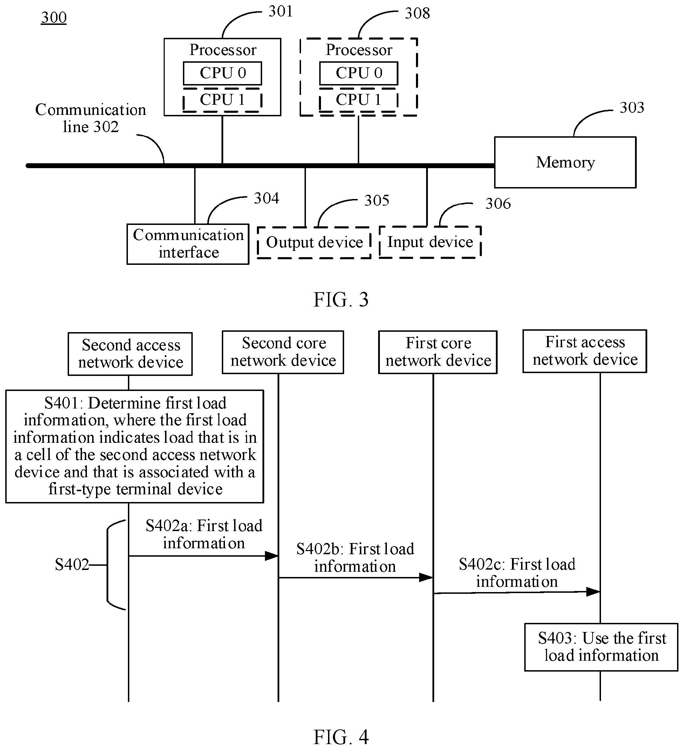

For example, the related functions of the terminal device, the access network device, and the core network device in this application may be implemented by a communication apparatus 300 in FIG. 3. The communication apparatus 300 includes one or more processors 301 and at least one communication interface (only an example in which a communication interface 304 and one processor 301 are included is used for description in FIG. 3). The processor 301 and the communication interface 304 may be connected through a communication line 302. Optionally, the communication apparatus 300 may further include a memory 303.

The processor 301 may be a general-purpose central processing unit (central processing unit, CPU), a microprocessor, an application-specific integrated circuit (application-specific integrated circuit, ASIC), or one or more integrated circuits configured to control program execution of the solutions of this application.

The communication line 302 is configured to connect different components.

The communication interface 304 may be an apparatus such as a transceiver module, a transceiver, or a transceiver machine, and is configured to communicate with another device or a communication network. The communication network may be, for example, an Ethernet, a radio access network (radio access network, RAN), or a wireless local area network (wireless local area network, WLAN). Optionally, the communication interface 304 may alternatively be a transceiver circuit located in the processor 301, and is configured to implement signal input and signal output of the processor.

The memory 303 may be an apparatus with a storage function. For example, the memory may be a read-only memory (read-only memory, ROM), another type of static storage device capable of storing static information and instructions, a random access memory (random access memory, RAM), or another type of dynamic storage device capable of storing information and instructions, or may be an electrically erasable programmable read-only memory (electrically erasable programmable read-only memory, EEPROM), a compact disc read-only memory (compact disc read-only memory, CD-ROM), another compact disc storage, an optical disc storage (including a compact disc, a laser disc, an optical disc, a digital versatile disc, a Blu-ray disc, or the like), a magnetic disk storage medium, another magnetic storage device, or any other medium capable of including or storing an expected computer program in a form of an instruction structure or a data structure and capable of being accessed by a computer. However, the memory is not limited thereto. The memory may exist independently, and is connected to the processor through the communication line 302. Alternatively, the memory may be integrated with the processor.

The memory 303 is configured to store computer-executable instructions for executing the solutions in this application, and the processor 301 controls the execution. The processor 301 is configured to execute the computer-executable instructions stored in the memory 303, to implement the method provided in embodiments of this application.

Alternatively, optionally, in this embodiment of this application, the processor 301 may perform processing related functions in a method provided in the following embodiment in this application, and the communication interface 304 is responsible for communication with another device or a communication network. This is not specifically limited in this embodiment of this application.

Optionally, the computer program or the instructions in this embodiment of this application may also be referred to as application code. This is not specifically limited in this embodiment of this application.

During specific implementation, in an embodiment, the processor 301 may include one or more CPUs such as a CPU 0 and a CPU 1 in FIG. 3.

During specific implementation, in an embodiment, the communication apparatus 300 may include a plurality of processors, for example, the processor 301 and a processor 308 in FIG. 3. Each of the processors may be a single-core (single-core) processor or a multi-core (multi-core) processor. The processor herein may include but is not limited to at least one of the following various computing devices that run software: a central processing unit (central processing unit, CPU), a microprocessor, a digital signal processor (DSP), a microcontroller unit (microcontroller unit, MCU), an artificial intelligence processor, or the like. Each computing device may include one or more cores configured to perform an operation or processing by executing software instructions.

During specific implementation, in an embodiment, the communication apparatus 300 may further include an output device 305 and an input device 306. The output device 305 communicates with the processor 301, and may display information in a plurality of manners. For example, the output device 305 may be a liquid crystal display (liquid crystal display, LCD), a light emitting diode (light emitting diode, LED) display device, a cathode ray tube (cathode ray tube, CRT) display device, a projector (projector), or the like. The input device 306 communicates with the processor 301, and may receive an input of a user in a plurality of manners. For example, the input device 306 may be a mouse, a keyboard, a touchscreen device, or a sensing device.

It may be understood that the structure shown in FIG. 3 does not constitute a limitation on the communication apparatus. The communication apparatus may include more or fewer components than those shown in the figure, or combine some components, or have a different component arrangement.

It should be noted that, in the following embodiments of this application, a name of a message between the apparatuses, a name of each parameter, a name of each piece of information, or the like is merely an example, and may be another name in another embodiment. This is not specifically limited in the method provided in this application.

It may be understood that, in embodiments of this application, each apparatus may perform some or all of steps in embodiments of this application. These steps or operations are merely examples. In embodiments of this application, other operations or variations of various operations may be further performed. In addition, the steps may be performed in a sequence different from a sequence presented in embodiments of this application, and not all the operations in embodiments of this application may be performed.

The following describes, with reference to the communication system shown in FIG. 2, a communication method provided in embodiments of this application. FIG. 4 shows a communication method according to this application. The communication method includes the following steps.

S401: A second access network device determines first load information.

The first load information indicates load that is in a cell of the second access network device and that is associated with a first-type terminal device.

For example, the load that is in the cell of the second access network device and that is associated with the first-type terminal device may include load that is in the cell of the second access network device and that is brought by the first-type terminal device. Alternatively, the load that is in the cell of the second access network device and that is associated with the first-type terminal device may include load that is in the cell of the second access network device and that serves the first-type terminal device.

The second access network device belongs to a second system, the first-type terminal device has a capability of accessing the second access network device and the first access network device, and the first access network device belongs to a first system. Therefore, the first load information may indicate load information that is in the access network device of the second system and that is associated with a terminal device that can access both the second system and the first system.

For example, when the first system is a 5G system, and the second system is a 4G system, the first-type terminal device may be referred to as a 5G terminal. Certainly, the first-type terminal device may also be referred to as 5G-UE, an NR terminal, or NR UE. This is not specifically limited in this application.

Optionally, the second access network device can determine, at a granularity of a cell, load that is in each cell of the second access network device and that is associated with the first-type terminal device. In this application, one cell is used as an example for description. It may be understood that the method provided in this application is applicable to any cell of the second access network device.

For ease of description, in the following embodiments of this application, " the cell of the second access network device" is referred to as "a second cell", and the two may be replaced with each other. In addition, in the method provided in this application, "a first cell" is further used, and is described in the following embodiments. Details are not described herein again.

In a possible implementation, the second access network device may identify the first-type terminal device based on a terminal capability reported by the terminal device, and determine the first load information based on the terminal capability of the first-type terminal device.

S402: The second access network device sends first load information to the first access network device. Correspondingly, the first access network device receives the first load information from the second access network device.

Optionally, the second access network device can determine, at the granularity of the cell, the load associated with the first-type terminal device, so that the second access network device may send, at the granularity of the cell, the load associated with the first-type terminal device. In this scenario, the second access network device may send identifier information of the second cell and the first load information, to indicate that the first load information indicates the load that is in the second cell and that is associated with the first-type terminal device.

For example, the identifier information of the second cell may be an evolved universal terrestrial radio access network cell global identifier (evolved universal terrestrial radio access network cell global identifier, ECGI) and/or a physical cell identifier (physical cell identifier, PCI).

S403: The first access network device uses the first load information.

In an example, that the first access network device uses the first load information includes: The first access network device determines, based on the first load information, whether to perform an energy saving operation. The energy saving operation includes an operation used to reduce energy consumption of the first access network device or reduce overall energy consumption of a wireless communication network.

That the first access network device determines, based on the first load information, whether to perform an energy saving operation may include: The first access network device determines, based on the first load information, to perform the energy saving operation, or determines not to perform the energy saving operation.

As user requirements increase, density of deploying the access network device also increases. As a result, the energy consumption of the access network device increases and electricity fees increase, and increasingly high operation costs of the wireless communication network are caused. Based on the solution provided in this application, the first load information can indicate the load that is in the cell of the second access network device and that is associated with the first-type terminal device, so that the first access network device can perform the more precise and effective energy saving operation based on the first load information, thereby reducing the energy consumption of the wireless communication network, and further reducing the operating costs of the wireless communication network.

In another example, that the first access network device uses the first load information includes: The first access network device determines, based on the first load information, whether to perform load balancing. In a specific example, load balancing may also be referred to as mobility load balancing.

That the first access network device determines, based on the first load information, whether to perform load balancing may include: The first access network device determines, based on the first load information, to perform load balancing, or determines not to perform load balancing.

Usually, the load balancing may include evenly distributing load between cells and between cell areas; or may include transferring some traffic from a congested cell or a congested area of a cell. Based on the solution provided in this application, the first load information can indicate the load that is in the cell of the second access network device and that is associated with the first-type terminal device, so that the first access network device can perform more precise and effective load balancing based on the first load information, thereby improving communication performance and user quality of service.

Based on the foregoing solution, for example, the first access network device belongs to the first system, the second access network device belongs to the second system, and the first system is different from the second system. The first access network device in the first system can obtain the load information that is in the second cell of the second system and that is associated with the first-type terminal device. The first-type terminal has the capability of accessing the first access network device and the second access network device. In other words, the first access network device can obtain the load information associated with the terminal device that has the capability of accessing the first access network device. Compared with the first access network device obtaining load information that is not used to distinguish between terminal device types, the first access network device can obtain valid and detailed load information, so that the first access network device can perform more precise management by using the load information, thereby improving communication performance and user quality of service.

For example, in a deployment scenario shown in FIG. 1, a possible implementation solution, when cell load of a 5G network is lower than a threshold, the 5G network switches off a corresponding cell in the network, so that energy consumption of the 5G network is reduced. For example, when load of a cell 1 in the 5G network is lower than a threshold (for example, lower than 20% of physical resource block (physical resource block, PRB) utilization), the 5G access network device switches off the cell 1. In addition, when load of a 4G network is higher than a threshold, a 4G access network device may request the 5G access network device to switch on a switch-off cell. After the cell in the 5G network is switched on, the 4G access network device hands over some terminal devices to the 5G access network device, so that the load of the 4G network is reduced, and quality of service of the terminal devices is improved. For example, when load of a cell 2 in the 4G network is higher than a threshold (for example, higher than 80% of the PRB utilization), the 4G access network device requests the 5G access network device to switch on the cell 1, and hands over some terminal devices in the cell 2 to the cell 1, so that the load of the cell 1 is reduced.

However, in actual application, there may be two types of terminal devices in the 4G network. One is a terminal device that can access only a 4G access network (4G-UE for short below), and the other is a terminal device that can access both a 4G access network and a 5G access network (5G-UE for short below). In the foregoing solution, the 4G access network determines, based on cell load, whether to request the 5G access network to switch on a cell in the 5G access network. If the 5G access network is requested to switch on a cell in the 5G access network, the 5G access network activates the corresponding cell after receiving a cell activation request from the 4G access network.

However, load of a cell in the 4G access network may be brought by the 4G-UE. When a proportion of load related to the 5G-UE in the cell load is low, because the 4G-UE cannot be handed over to the 5G access network, the following problems are caused in the foregoing possible manner: A cell in the 5G access network is activated, but load in the cell of the 5G access network that can be handed over to is low. Consequently, energy consumption of the 5G access network increases, and the load in the 4G access network cannot be significantly reduced, and quality of service of the terminal device cannot be effectively improved. For example, PRB utilization of a cell in the 4G access network is 90%, where PRB utilization of a cell brought by the 4G-UE is 85%, and PRB utilization of a cell brought by the 5G-UE is 5%. The 4G access network requests the 5G access network to activate a cell in the 5G access network because the PRB utilization (90%) exceeds a threshold (80%). After the cell in the 5G access network is activated, the 5G-UE is handed over to the 5G access network. Therefore, a maximum of 5% of cell load can be handed over to the 5G access network. This causes the following problems: (1) A minimum PRB utilization of the cell in the 4G access network is 85%, but still exceeds the threshold, and the PRB utilization of the cell in the 4G access network does not significantly decrease. As a result, quality of service of a terminal device in the 4G access network cannot be significantly improved. (2) The cell in the 5G access network is activated. As a result, energy consumption of the 5G network significantly increases.

Based on the solution provided in this application, in the scenario shown in FIG. 1, the 4G access network can send, to the 5G access network, the load (for example, the 5% PRB utilization) brought by the 5G-UE in the 4G access network device, and the 5G access network can determine, based on the load, whether to perform an energy saving operation or load balancing. For example, when determining that the load brought by the 5G-UE in the 4G access network device is less than a first threshold (for example, the 20% PRB utilization), the 5G access network device performs the energy saving operation, and does not switch on the cell of the 5G access network, so that the energy consumption of the 5G network is reduced. In addition, after knowing that the 5G access network refuses to switch on the cell of the 5G access network, the 4G access network device may send a request to another access network device or hand over a terminal device in the 4G access network device to another access network device, to reduce the load of the 4G access network device, so that quality of service of the terminal device in the 4G access network device is improved.

In a possible implementation, the first load information includes at least one of the following.

### (1) Number of active first-type terminal devices

In a specific example, the number of active first-type terminal devices is a number of active first-type terminal devices in the second cell.

Optionally, the active first-type terminal device may be a first-type terminal device that sends and/or receives data on an uplink (uplink, UL) and/or a downlink (downlink, DL). For example, the active first-type terminal device may be a first-type terminal device that uses applications (applications) to send and/or receive data on an uplink and/or a downlink.

Whether the first-type terminal device is active may dynamically change. Therefore, the number of active first-type terminal devices may be a mean number (mean number) or a maximum number, for example, may be a mean number or maximum number of active first-type terminal devices in a time period. The time period may be duration agreed on in a protocol, or may be determined by the second access network device. This is not specifically limited in this application.

In a possible implementation, the number of active first-type terminal devices may be the mean number or maximum number of first-type terminal devices that are using applications to send and/or receive data on an uplink and/or a downlink.

Optionally, in the first load information, the number of active first-type terminal devices may be explicitly represented, where, for example, the first load information includes the number of active first-type terminal devices; or the number of active first-type terminal devices may be implicitly represented, where, for example, the first load information includes the total number of active terminal devices and a ratio of the number of active first-type terminal devices to the total number. Certainly, the number of active first-type terminal devices may alternatively be represented in another form. This is not specifically limited in this application.

### (2) RRC connections (RRC connections)

The RRC connections indicate an overall status of RRC connections per cell (The RRC connections indicate an overall status of RRC connections per cell). For example, the RRC connections indicate an overall status of RRC connections in the second cell.

In a possible implementation, the overall status of the RRC connections may include a number of RRC connections and/or an available RRC connection capacity value (connection capacity value). For example, the number of RRC connections may be a number of RRC connections in a cell. The available RRC connection capacity value indicates a remaining percentage of the number of RRC connections to a maximum number of RRC connections supported by a cell. For example, 0 indicates no available capacity, 80 indicates 80% of a maximum available capacity, and 100 indicates the maximum available capacity. For example, Available RRC connection capacity value = (Maximum number of RRC connections - Number of RRC connections)/Maximum number of RRC connections.

In a specific example, the number of RRC connections may be a number of RRC connections that are related to the first-type terminal devices and that are established in a cell.

In a specific example, the maximum number of RRC connections may be a maximum number of RRC connections of the first-type terminal devices that is supported by a cell. Correspondingly, the available RRC connection capacity value indicates a remaining percentage of a number of established RRC connections related to the first-type terminal devices to the maximum number of RRC connections of the first-type terminal devices that is supported by the cell.

In another specific example, the maximum number of RRC connections may be a maximum number of RRC connections that is supported by a cell (where terminal device types are not distinguished from each other). Correspondingly, the available RRC connection capacity value indicates a remaining percentage of the number of established RRC connections related to the first-type terminal devices to the maximum number of RRC connections that is supported by the cell.

### (3) Transport layer capacity indicator (transport layer capacity indicator)

The transport layer capacity indicator indicates a capacity provided by a transport network and/or an available capacity of a transport network, and specifically indicates a capacity provided by the transport network experienced by a cell, and/or an available capacity of the transport network.

In a possible implementation, the capacity provided by the transport network experienced by the cell indicates a maximum capacity provided by a transport part of the cell in a downlink, and/or a maximum capacity provided by a transport part of the cell in an uplink. For example, a unit of the capacity provided by the transport network may be, for example, kilobits (kbps) per second.

In a possible implementation, the available capacity of the transport network experienced by the cell indicates a ratio of an available capacity provided by a transport part of the cell in a downlink to a maximum capacity, and/or a ratio of an available capacity provided by a transport part of the cell in an uplink to the maximum capacity.

In a specific example, the capacity provided by the transport network indicates a maximum capacity provided by the transport part of the cell for the first-type terminal device. The available capacity of the transport network indicates a ratio of an available capacity provided by the transport part of the cell for the first-type terminal device to a maximum capacity provided for the first-type terminal device.

### (4) Composite available capacity group (composite available capacity group)

The composite available capacity group indicates an available resource level, and specifically, may indicate an overall available resource level of an uplink and a downlink.

In a possible implementation, the composite available capacity group includes a capacity value (capacity value), for indicating an available resource status relative to an entire cell. For example, the capacity value may be a ratio of available resources of the cell to total resources of the cell. For example, 0 indicates that there are no available resources relative to the entire cell, 100 indicates that there are maximum available resources relative to the entire cell, and 50 indicates that there are 50% of the available resources relative to the entire cell.

Optionally, the composite available capacity group may further include a cell capacity class value (cell capacity class value), for indicating a capacity class of the cell relative to another cell. For example, 1 indicates a minimum cell capacity, 40 indicates 40% of a maximum cell capacity, and 100 indicates the maximum cell capacity.

In a specific example, the composite available capacity group indicates an available resource level of resources provided by the cell for the first-type terminal device.

### (5) Slice available capacity (slice available capacity)

The slice available capacity may indicate a ratio of available resources of a network slice to total resources of a cell, and may specifically indicate a ratio of total available resources of the network slice in a cell to the total resources of the cell. For example, 0 indicates no available capacity, 60 indicates 60% of a maximum available capacity, and 100 indicates the maximum available capacity.

In a specific example, the slice available capacity indicates a ratio of available resources of a network slice provided for the first-type terminal device to total resources of a cell.

### (6) Radio resource status (radio resource status)

The radio resource status indicates PRB utilization, and may specifically indicate PRB utilization in an uplink and/or a downlink.

Optionally, the PRB utilization may be at least one of the following: PRB utilization of a guaranteed bit rate (guaranteed bit rate, GBR), PRB utilization of a non-guaranteed bit rate (non-GBR), or total PRB utilization of a GBR and a non-GBR.

Optionally, the radio resource status may further indicate physical downlink control channel control channel element (physical downlink control channel control channel element, PDCCH CCE) utilization used for uplink and/or downlink scheduling.

In a specific example, the radio resource status indicates PRB utilization related to the first-type terminal device, and may further indicate PDCCH CCE utilization that is related to the first-type terminal device and that is used for uplink and/or downlink scheduling.

In some embodiments, each of the foregoing listed six items may be referred to as a load type or a load object. That is, the first load information may indicate one or more types of load associated with the first-type terminal device. In this embodiment, in a possible implementation, the first load information may include a load type and a value corresponding to the load type. To be specific, content included in the first load information may be: {load type 1: value corresponding to the load type 1; load type 2: value corresponding to the load type 2; ...; and load type N: value corresponding to the load type 2}.

For example, content included in the first load information may be: {the number of active first-type terminal devices: 10; and a slice available capacity: 50}.

Optionally, in step S402, the second access network device may send the first load information to the first access network device via a second core network device and a first core network device. For example, step S402 may include the following steps.

S402a: The second access network device sends the first load information to the second core network device. Correspondingly, the second core network device receives the first load information from the second access network device.

S402b: The second core network device sends the first load information to the first core network device. Correspondingly, the first core network device receives the first load information from the second core network device.

S402c: The first core network device sends the first load information to the first access network device. Correspondingly, the first access network device receives the first load information from the first core network device.

An implementation of S402a may be as follows: The second access network device sends an eNB configuration transfer (eNB configuration transfer) message to the second core network device, and sends, to the second core network device, the eNB configuration transfer message carrying the first load information. For example, the first load information may be carried in an inter-system self-organizing network (self-organizing network, SON) information report (inter-system SON information report) of the eNB configuration transfer message. Alternatively, the first load information may be carried in an inter-system self-organizing network information request (inter-system SON information request) of the eNB configuration transfer message.

For example, when the first load information includes a number of active first-type terminal devices, and the number is explicitly indicated, the number of active first-type terminals may be included in the inter-system SON information report or the inter-system SON information request. For example, when the first-type terminal device is a 5G terminal, the number of active first-type terminals may be a number of active 5G terminals.

Alternatively, when the first load information includes a number of active first-type terminal devices, and the number is implicitly indicated, the number of active terminals and a ratio of the number of active first-type terminal devices to the number of active terminals may be included in the inter-system SON information report or the inter-system SON information request.

In S402b, the second core network device may send the first load information to the first core network device through an interface between the second core network device and the first core network device. For example, when the second core network device is a core network device in the 4G system, and the first core network device is a core network device in the 5G system, the second core network device may send the first load information to the first core network device through an N26 interface.

An implementation of S402c may be as follows: The first core network device may send a downlink RAN configuration transfer (downlink RAN configuration transfer) message to the first access network device, send, to the first access network device, the downlink RAN configuration transfer message carrying the first load information. For example, the first load information may be carried in an inter-system SON information report (inter-system SON information report) of the downlink RAN configuration transfer message. Alternatively, the first load information may be carried in an inter-system SON information request (inter-system SON information request) of the downlink RAN configuration transfer message.

For example, for a manner of carrying the first load information in the inter-system SON information report or the inter-system SON information request, refer to related descriptions in step S402a. Details are not described herein again.

It may be understood that, in addition to the foregoing steps S402a to S402c, the second access network device may send the first load information to the first access network device in another manner. For example, the second access network device sends the first load information to the first access network device through an interface between the second access network device and the first access network device. A manner of sending the first load information is not specifically limited in this application.

Optionally, in step 403, performing an energy saving operation or load balancing may be performing an energy saving operation or load balancing on a cell of the first access network device. For ease of description, in this application, "the cell of the first access network device" is referred to as "a first cell".

Optionally, the first cell may be a cell requested or indicated by the second access network device. In this scenario, in step S402, in addition to the first load information, the second access network device may further send identifier information of the first cell to the first access network device, to indicate the cell on which the energy saving operation or load balancing is performed.

That the first access network device determines, based on the first load information, whether to perform an energy saving operation includes: The first access network device determines, based on the first load information, whether to switch on (switch on) or switch off (switch off) the cell of the first access network device (namely, the first cell).

It should be noted that in this application, "switch on" may also be understood as " activate (activate)", "switch off" may also be understood as " deactivate (deactivate)", and the two may be replaced with each other. This is not specifically limited in this application.

Optionally, "switch off a cell" may include switching off a radio frequency channel, a carrier frequency, a symbol, a cell, or the like. This is not specifically limited in this application.

Optionally, after a cell is switched off, the cell enters a dormant (dormant, or inactive) state. After the cell enters the dormant state, the cell cannot provide a service for a terminal device.

Optionally, the first access network device may determine, based on the first load information, whether to switch on or switch off the first cell in the following two manners:

Manner 1: The first access network device determines, when the load indicated by the first load information is greater than a first threshold, to switch on the first cell; or the first access network device determines, when the load indicated by the first load information is less than a second threshold, to switch off the first cell.

The first access network device may also determine, when the load indicated by the first load information is equal to the first threshold, to switch on the first cell or perform no operation. Similarly, the first access network device may also determine, when the load indicated by the first load information is equal to a second threshold, to switch off the first cell or perform no operation.

Optionally, when the first access network device switches off the first cell, if there is a terminal device in an RRC connected mode in the first cell, the first access network device may hand over the terminal device to another access network device. In addition, when the first cell is switched off, the first access network device prevents a terminal device in an RRC idle mode from camping on the first cell, or prevents a terminal device in another cell from being handed over to the first cell.

In a possible implementation, when the first load information corresponds to N load types, or the first load information indicates N types of load, the first threshold may include a threshold corresponding to each type of load in the N types of load. In this case, that the first access network device determines, when the load indicated by the first load information is greater than or equal to the first threshold, to switch on the first cell may include: The first access network device determines, when M types of load in the N types of load indicated by the first load information is greater than or equal to respective corresponding thresholds, to switch on the first cell. N is a positive integer greater than 1, and M is a positive integer less than or equal to M. In other words, the first access network device determines, when some or all of the N types of load indicated by the first load information are greater than or equal to respective corresponding thresholds, to switch on the first cell.

For example, an example in which the first load information indicates the number of active first-type terminal devices, the RRC connections, and the slice available capacity is used. The first threshold may include a threshold A, a threshold B, and a threshold C, respectively corresponding to the number of active first-type terminal devices, the RRC connections, and the slice available capacity. In this example, the first access network device determines, when one or more of the following conditions are met, to switch on the first cell: The number of active first-type terminal devices is greater than or equal to the threshold A, the number of RRC connections indicated by the RRC connections is greater than or equal to the threshold B, or the slice available capacity is greater than or equal to the threshold C.

Optionally, the first threshold and the second threshold may be the same, or may be different. This is not specifically limited in this application. For a comparison between the load indicated by the first load information and the second threshold, refer to a comparison between the load indicated by the first load information and the first threshold. Details are not described herein again.

In Manner 1, when the load indicated by the first load information is greater than or equal to the first threshold, the first access network device may switch on the first cell, so that the first-type terminal device in the second cell can be handed over to the first cell. Therefore, the first cell and the second cell jointly bear the load indicated by the first load information, so that the overall energy consumption of the wireless communication network is reduced. In addition, when the load indicated by the first load information is less than the second threshold, the load of the second cell may be light, and the second access network device may be able to provide good quality of service. Therefore, the first cell may be switched off to reduce the energy consumption of the first access network device.

Optionally, when the load indicated by the first load information is greater than the second threshold, the first access network device may not switch off the first cell, in other words, the first cell remains switched on. In this scenario, energy consumption is generated when the first cell is switched on, and it may also be considered that the first access network device performs no energy saving operation.

Manner 2: When a sum of the load indicated by the first load information and load indicated by second load information is greater than a third threshold, the first access network device determines to switch on the first cell; or when a sum of the load indicated by the first load information and load indicated by second load information is less than a fourth threshold, the first access network device determines to switch off the first cell.

When the sum of the load indicated by the first load information and the load indicated by the second load information is equal to the third threshold, the first access network device may also determine to switch on the first cell or perform no operation. Similarly, when the sum of the load indicated by the first load information and the load indicated by the second load information is equal to the fourth threshold, the first access network device may also determine to switch off the first cell or perform no operation.

The second load information indicates load that is in a cell of a third access network device (referred to as a third cell below) and that is associated with the first-type terminal device. The third access network device and the first access network device belong to different systems, and the third access network device and the second access network device belong to a same system.

Optionally, the third access network device and the second access network device may be a same access network device, or may be different access network devices. When the third access network device and the second access network device are a same access network device, the third cell is different from the second cell. The third cell is a neighboring cell of the first cell. In addition, the second cell is also a neighboring cell of the first cell.

Optionally, the third threshold and the fourth threshold may be the same or may be different. This is not specifically limited in this application. For a comparison between the sum of the load indicated by the first load information and the load indicated by the second load information and each of the third threshold and the fourth threshold, refer to the comparison between the load indicated by the first load information and the first threshold. Details are not described herein again.

Optionally, the second load information and the first load information may be load information received by the first access network device in a first time period.

Optionally, the first time period may be duration of a first timer. If the first access network device first receives the first load information, the first timer may be started after the first load information is received. If the first access network device first receives the second load information, the first timer may be started after the second load information is received. In this scenario, the first access network device starts the first timer after receiving one piece of load information, and further receives another piece of load information before the first timer expires.

Optionally, the duration of the first timer may be specified in a protocol; or may be predefined by the first access network device; or may be configured by the first core network device for the first access network device; or may be configured by a network control device (for example, an operation, administration and maintenance (operation, administration and maintenance, OAM) system) for the first access network device. This is not specifically limited in this application.

Optionally, when the first load information and the second load information are carried in the inter-system SON information request or the inter-system SON information report, the first access network device may determine, in Manner 2, whether to switch on or switch off the first cell.

In Manner 2, the first access network device can determine, with reference to load that is in the plurality of cells and that is associated with the first-type terminal device, whether to perform the energy saving operation or load balancing.

Optionally, that the first access network device determines, based on the first load information, whether to perform load balancing includes: The first access network device determines, based on the first load information, whether to perform load balancing on a cell of the first access network device. In other words, the first access network device determines, based on the first load information, whether to perform load balancing on a cell in the first system.

For example, when the load (namely, the load that is in the second cell and that is associated with the first-type terminal device) indicated by the first load information is less than a fifth threshold, and the load of the first cell is less than a sixth threshold, the load that is in the second cell and that is associated with the first-type terminal device is light, the load in the first cell is also light, and the first access network device may determine not to perform load balancing on the first cell.

Alternatively, for example, when the load indicated by the first load information is less than a fifth threshold, and the load of the first cell is greater than a sixth threshold, the load that is in the second cell and that is associated with the first-type terminal device is light, the load in the first cell is heavy, and the first access network device may determine to perform load balancing on the first cell.

Alternatively, when the load indicated by the first load information is equal to a fifth threshold, and the load of the first cell is equal to a sixth threshold, the first access network device may determine not to perform load balancing or perform no operation on the first cell.

Optionally, the performing load balancing on the first cell may include: initiating a handover of a first-type terminal device in the first cell, and/or requesting to adjust a handover parameter and/or a reselection parameter of the second cell.

For example, the handover may be transferring a connection of the terminal device from one radio channel to another radio channel. The two radio channels may be in a same cell or different cells. In this application, the initiating a handover of a first-type terminal device in the first cell may include: initiating a process of transferring a connection of the first-type terminal device in the first cell from a radio channel of the first cell to a radio channel of the second cell. Based on this, when the load of the first cell is heavy, the first-type terminal device in the first cell is handed over to the second cell, so that the load of the first cell can be reduced.

For example, the requesting to adjust a handover parameter and/or a reselection parameter of the second cell may include: requesting the second access network device to adjust the handover parameter and/or the reselection parameter of the second cell.

In a possible implementation, the adjusted handover parameter of the second cell may increase a probability that the first-type terminal device in the first cell uses the second cell as a target cell in a handover process. The adjusted reselection parameter of the second cell may increase a probability that the first-type terminal device in the first cell reselects the second cell in a cell reselection process. Therefore, after the parameter is adjusted, some first-type terminal devices in the first cell may be handed over to or reselected to the second cell, so that the load of the first cell is reduced.

Optionally, the first threshold, the second threshold, the third threshold, the fourth threshold, the fifth threshold, or the sixth threshold may be specified in a protocol; or may be predefined by the first access network device; or may be configured by the first core network device for the first access network device; or may be configured by a network control device (for example, an OAM system) for the first access network device; or may be negotiated by the first access network device and the second access network device. This is not specifically limited in this application.

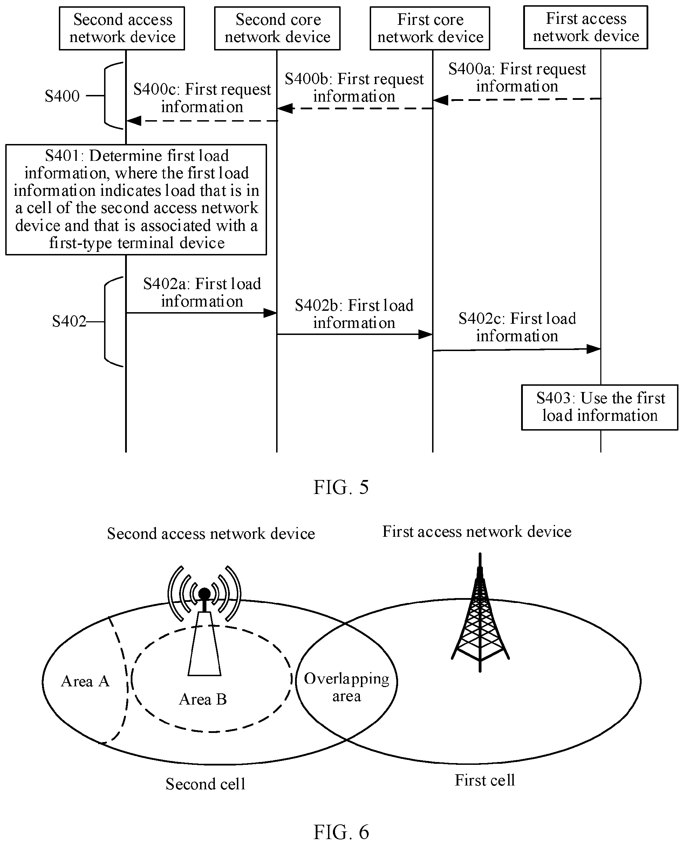

The following further describes the communication method provided in this application. In a possible implementation scenario, as shown in FIG. 5, before step S401, the method further includes the following steps.

S400: A first access network device sends first request information to a second access network device. Correspondingly, the second access network device receives the first request information from the first access network device.

The first request information is used to request the second access network device to send load information. Optionally, the first request information may be used to request the second access network device to send the load information associated with a first-type terminal device. Alternatively, the first request information may not limit a type of a terminal device associated with the requested load information. In this case, after receiving the first request information, the second access network device may report the load information associated with the first-type terminal device. In addition, the second access network device may further report overall load information of a second cell, for example, report a total number of active terminal devices in the second cell and a number of active first-type terminal devices.

Based on this solution, the second access network device may send the load information based on a request of the first access network device, to prevent the first access network device from frequently sending the load information, so that signaling overheads are reduced.

Optionally, the first request information may include at least one of the following: a load type, periodicity information, or information about a threshold that corresponds to the load information. For ease of description, in the following embodiments of this application, the threshold is referred to as a seventh threshold. In other words, the first request information may include at least one of the following: a load type, periodicity information, or information about the seventh threshold that corresponds to the load information.

In a possible implementation, the load type corresponding to the load information may indicate a type of load that the first access network device requests to report. The load type may include at least one of the following: a number of active first-type terminal devices, RRC connections, a transport layer capacity indicator, a composite available capacity group, a slice available capacity, or a radio resource status. For details, refer to related descriptions in step S401. Details are not described herein again.

In some embodiments, after receiving the load type corresponding to the load information, the second access network device may include, in the load information, the load type and a value corresponding to the load type, and report the load information to the first access network device.

In an example, in the first request information, the load type corresponding to the load information may be represented in a manner of a bitmap (bitmap). For example, the bitmap may include K bits, each bit corresponds to one load type, different bits correspond to different load types, and a value of a bit indicates whether to request load corresponding to the bit. For example, when the value of the bit is a first value, it indicates that the first access network device requests the load corresponding to the bit; or when the value of the bit is a second value, it indicates that the first access network device does not request the load corresponding to the bit. K may be a total number of load types.

For example, K is equal to 6. A first bit in the bitmap corresponds to the number of active first-type terminal devices; a second bit corresponds to the RRC connections; a third bit corresponds to the transport layer capacity indicator; a fourth bit corresponds to a composite available capacity group; a fifth bit corresponds to the slice available capacity; and a sixth bit corresponds to the radio resource status. If the first value is 1, 100101 may indicate the number of active first-type terminal devices, the composite available capacity group, and the radio resource status that are requested by the first access network device.

In another example, in the first request information, the load type corresponding to the load information may be represented by using a first field, and different values of the first field may indicate different load requested by the first access network device. For example, an example in which the first field includes three bits is used. Load requested by the first access network device under each value of the first field may be shown in Table 1.

**Table 1**

| Value of a first field | Request load |
|---|---|
| 000 | Number of active first-type terminal devices |
| 001 | RRC connections |
| 010 | Transport layer capacity indicator |
| 011 | Composite available capacity group |
| 100 | Slice available capacity |
| 101 | Radio resource status |
| 110 | Reserved |
| 111 | Reserved |

It should be noted that a correspondence between the value and the load shown in Table 1 is merely an example for description. In actual application, there may be another correspondence. This is not specifically limited in this application.

In still another example, the first request information may carry a name of the load type corresponding to the load information, to explicitly indicate the load requested by the first access network device.

In a possible implementation, the periodicity information indicates a periodicity in which the second access network device sends the load information. After receiving the first request information, the second access network device may send the load information to the first access network device based on the periodicity indicated by the periodicity information.

For example, the periodicity may be a single time, 1000 milliseconds, 2000 milliseconds, 5000 milliseconds, 10000 milliseconds, or the like. Specific duration of the periodicity is not limited in this application.

Optionally, when the periodicity is the single time, after the second access network device receives the first request information, the second access network device may send the load information to the first access network device for the single time. Subsequently, after receiving the first request information again, the second access network device sends the load information again, in other words, the second access network device sends the load information based on triggering of the first request information. When the periodicity is not the single time, the second access network device may send the load information to the first access network device at an interval of the periodicity.

Optionally, when the first access network device requests the second access network device to send the load information for the single time, the first request information may alternatively not carry the periodicity information. That is, the periodicity information may be default. When the periodicity information is default, the sending periodicity is the single time by default.

In an example, the first request information may explicitly carry the periodicity information. For example, the first request information carries the duration of the periodicity.

In another example, in the first request information, the periodicity information may be represented by using a second field, and different values of the second field may indicate different periodicities. For example, an example in which the second field includes two bits is used. Duration of a periodicity under each value of the second field may be shown in the following Table 2.

**Table 2**

| Value of a second field | Periodicity |
|---|---|
| 00 | Single time |
| 01 | 1000 milliseconds |
| 10 | 2000 milliseconds |
| 11 | 5000 milliseconds |

In a possible implementation, load indicated by the load information reported by the second access network device is greater than or equal to a seventh threshold.

In a possible implementation, after obtaining the seventh threshold, the first access network device may determine a relationship between cell load and the seventh threshold. When the cell load is greater than the seventh threshold, the load information indicates the load. When the cell load is less than the seventh threshold, the load information does not indicate the load. When the cell load is equal to the seventh threshold, the load information may or may not indicate the load. This is not specifically limited in this application.

For example, the seventh threshold may be specified in a protocol; or may be configured by a first core network device for the first access network device; or may be configured by a network control device for the first access network device; or may be negotiated by the first access network device and the second access network device. This is not specifically limited in this application.

Based on this solution, the first access network device may indicate the reporting load type, the reporting periodicity, or the reporting threshold based on a requirement of the first access network device, to prevent the second access network device from sending load information that is useless to the first access network device, so that signaling overheads are reduced.

For a manner in which a first access network device sends first request information to a second access network device, in some embodiments, the first access network device may send the first request information to the second access network device via a first core network device and a second core network device. For example, in this manner, step S400 may include the following steps.

S400a: The first access network device sends the first request information to the first core network device. Correspondingly, the first core network device receives the first request information from the first access network device.

S400b: The first core network device sends the first request information to the second core network device. Correspondingly, the second core network device receives the first request information from the first core network device.

For a manner of sending the first request information, refer to the manner of sending the first load information in step S401b. Details are not described herein again.

S400c: The second core network device sends the first request information to the second access network device. Correspondingly, the second access network device receives the first request information from the second core network device.

In a possible implementation of S400a, the first access network device may send an uplink RAN configuration transfer (uplink RAN configuration transfer) message to the first core network device, and send, to the first core network device, the uplink RAN configuration transfer message carrying the first request information. For example, the first request information may be carried in an inter-system SON information request of the uplink RAN configuration transfer message.

For example, when the first request information includes a load type corresponding to the load information, the load type may be carried in report characteristics (report characteristics) included in the inter-system SON information request. When the first request information includes periodicity information, the periodicity information may be carried in a reporting periodicity (reporting periodicity) included in the inter-system SON information request. When the first request information includes information about a seventh threshold, the information about the seventh threshold may be carried in an event based reporting (event based reporting) included in the inter-system SON information request.

Further, the reporting periodicity and the event based reporting may be included in a report type (report type) of the inter-system SON information request.

It should be noted that a manner of carrying the first request information is merely an example for description. In actual application, the first request information may be further carried in another information. This is not specifically limited in this application.

In a possible implementation of S400c, the second core network device may send an MME configuration transfer (MME configuration transfer) message to the second access network device, send, to the second access network device, the MME configuration transfer message carrying the first request information. For example, the first request information may be carried in an inter-system SON information request of the MME configuration transfer message. For a manner of carrying the first request information in the inter-system SON information request, refer to related descriptions in step S400a. Details are not described herein again.

It may be understood that, in addition to the foregoing steps S400a to S400c, the first access network device may send the first request information to the second access network device in another manner. For example, the second access network device sends the first request information to the first access network device through an interface between the second access network device and the first access network device. A manner of sending the first request information is not specifically limited in this application.

In addition, in a possible implementation scenario, the first-type terminal device in the embodiment shown in FIG. 4 or FIG. 5 is a terminal device that meets a handover condition in a second cell. The handover condition may be a handover condition for a handover to the first access network device. The terminal device that meets the handover condition may include: a terminal device that can be handed over to a first cell. In this implementation scenario, load indicated by first load information may be load that is in the second cell and that is associated with a part of first-type terminal devices, and the part of first-type terminal devices are terminal devices that meet the handover condition.

Optionally, the handover condition may include: good signal quality of the first cell, and/or sparse traffic distribution of terminal devices in the second cell. The good signal quality of the first cell may be that the signal quality of the first cell is greater than or equal to an eighth threshold.

For example, an example in which coverage of the second cell and coverage of the first cell are shown in FIG. 6 is used. It is assumed that five first-type terminal devices camp on an area A of the second cell, three first-type terminal devices camp on an area B of the second cell, and four first-type terminal devices camp on an overlapping area between the second cell and the first cell. In some implementations, because the five first-type terminal devices camping on the area A of the second cell are far away from the first cell, sensed signal quality of the first cell may be poor. Consequently, the handover condition may not be met. Because the three first-type terminal devices camping on the area B of the second cell and the four first-type terminal devices camping on the overlapping area are close to the first cell, sensed signal quality of the first cell may be good. Consequently, the handover condition may be met. Therefore, the first load information indicates load that is in the second cell and that is associated with the seven first-type terminal devices that camp on the area B and the overlapping area.

Optionally, in this scenario, in step S401, the second access network device may determine the first load information in the following three manners:
Manner 1: The second access network device determines the first load information based on a sounding reference signal (sounding reference signal, SRS) measurement result.

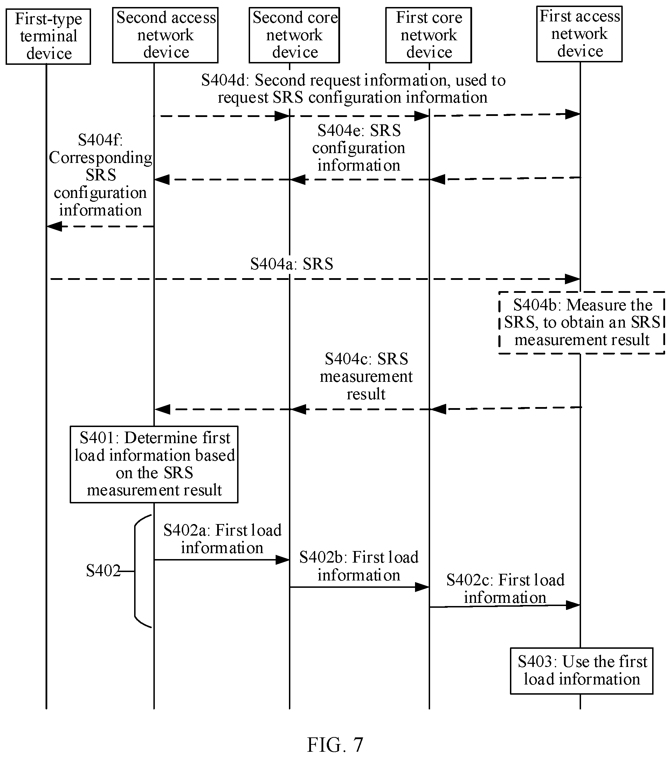

Optionally, the SRS measurement result is a result obtained by measuring an SRS by the first access network device. In this scenario, for example, as shown in FIG. 7, before step S401, the method further includes the following steps.

S404a: A first-type terminal device sends an SRS to a first access network device.

S404b: The first access network device measures the SRS sent by the first-type terminal device, to obtain an SRS measurement result.

S404c: The first access network device sends the SRS measurement result to a second access network device. Correspondingly, the second access network device receives the SRS measurement result from the first access network device.

In a possible implementation, the second access network device may determine first load information based on the SRS measurement result after receiving the SRS measurement result.

Optionally, in step S404a, the SRS sent by the first-type terminal device may be sent by the first-type terminal device based on SRS configuration information. Further, optionally, the SRS configuration information is requested by the second access network device from the first access network device. In this scenario, for example, before step S404a, the method may further include the following step.

S404d: The second access network device sends second request information to the first access network device. Correspondingly, the first access network device receives the second request information from the second access network device. The second request information is used to request SRS configuration information.

S404e: The first access network device sends the SRS configuration information to the second access network device. Correspondingly, the second access network device receives the SRS configuration information from the first access network device.

S404f: The second access network device sends the corresponding SRS configuration information to a first-type terminal. Correspondingly, the first-type terminal device receives the SRS configuration information corresponding to the first-type terminal device.

In a possible implementation, the SRS measurement result includes an SRS measurement result of at least one first-type terminal device. The SRS measurement result may correspond to an SRS resource identifier, and the SRS resource identifier may correspond to an identifier of the first-type terminal device. Therefore, the SRS measurement result may correspond to the first-type terminal device. The SRS measurement result corresponding to the first-type terminal device may be the SRS measurement result sent by the first-type terminal device.

Optionally, the SRS measurement result can reflect signal quality of a first cell. The SRS measurement result may be expressed as reference signal received power (reference signal received power, RSRP), reference signal received quality (reference signal received quality, RSRQ), a signal to interference plus noise ratio (signal to interference and noise ratio, SINR), or the like.

An implementation of S404b may be as follows: The first access network device performs uplink channel state estimation based on the SRS sent by the first-type terminal device, to obtain an SRS measurement result. The SRS measurement result may indicate an uplink channel state. The uplink channel state may be used by the access network device to schedule uplink transmission of the first-type terminal device, for example, transmission parameter selection, instantaneous rate selection, or parameter selection related to uplink multi-antenna transmission.

In a possible implementation, in step S404c, the first access network device may send the SRS measurement result to the second access network device via a first core network device and a second core network device. For example, in this manner, step S404c may include the following steps.
(1) The first access network device sends the SRS measurement result to the first core network device. Correspondingly, the first core network device receives the SRS measurement result from the first access network device. For example, the first access network device sends an uplink RAN configuration transfer (uplink RAN configuration transfer) message to the first core network device, send, to the first core network device, the uplink RAN configuration transfer message carrying the SRS measurement result. For example, the SRS measurement result may be carried in an inter-system SON information report in the uplink RAN configuration transfer message.

It should be noted that a manner of carrying the SRS measurement result is merely an example for description. In actual application, the SRS measurement result may be further carried in another information. This is not specifically limited in this application.

(2) The first core network device sends the SRS measurement result to the second core network device. Correspondingly, the second core network device receives the SRS measurement result from the first core network device.

For a manner of sending the SRS measurement result, refer to the manner of sending the first load information in step S401b. Details are not described herein again.

(3) The second core network device sends the SRS measurement result to the second access network device. Correspondingly, the second access network device receives the SRS measurement result from the second core network device. For example, the second core network device sends an MME configuration transfer (MME configuration transfer) message to the second access network device, and sends, to the second access network device, the MME configuration transfer message carrying the SRS measurement result. For example, the SRS measurement result may be carried in an inter-system SON information report in the MME configuration transfer message.

It may be understood that the first access network device may alternatively send the SRS measurement result to the second access network device in another manner. For example, the first access network device sends the SRS measurement result to the second access network device through an interface between the second access network device and the first access network device. A manner of sending the SRS measurement result is not specifically limited in this application.

An implementation in which the second access network device determines first load information based on the SRS measurement result after the second access network device receives the SRS measurement result may be as follows: The second access network device determines, based on a correspondence between the SRS measurement result and the SRS resource identifier and a correspondence between the SRS resource identifier and the identifier of the first-type terminal device, the SRS measurement result corresponding to the first-type terminal device. Therefore, whether the first-type terminal device meets a handover condition is determined based on the SRS measurement result corresponding to the first-type terminal device. For example, a first-type terminal device corresponding to an SRS measurement result greater than or equal to an eighth threshold is determined as the terminal device that meets the handover condition, so that load of the terminal device that can be handed over to the first cell is determined, and first load information is determined.

In a possible implementation, in step S404d, the second access network device may send the second request information to the first access network device via a first core network device and a second core network device. For example, in this manner, step S404d may include the following steps.
(1) The second access network device sends the second request information to the second core network device. Correspondingly, the second core network device receives the second request information from the second access network device. For example, the second access network device sends an eNB configuration transfer (eNB configuration transfer) message to the second core network device, and sends, to the second core network device, the eNB configuration transfer message carrying the second request information. For example, the second request information may be carried in an inter-system SON information request of the eNB configuration transfer message.

It should be noted that a manner of carrying the second request information is merely an example for description. In actual application, the second request information may be further carried in another information. This is not specifically limited in this application.

(2) The second core network device sends the second request information to the first core network device. Correspondingly, the first core network device receives the second request information from the second core network device.

For a manner of sending the second request information, refer to the manner of sending the first load information in step S401b. Details are not described herein again.

(3) The first core network device sends the second request information to the first access network device. Correspondingly, the first access network device receives the second request information from the first core network device. For example, the first core network device may send a downlink RAN configuration transfer (downlink RAN configuration transfer) message to the first access network device, send, to the first access network device, the downlink RAN configuration transfer message carrying the second request information. For example, the second request information may be carried in an inter-system SON information request of the downlink RAN configuration transfer message.

It may be understood that, the second access network device may send the second request information to the first access network device in another manner. For example, the second access network device sends the second request information to the first access network device through an interface between the second access network device and the first access network device. A manner of sending the second request information is not specifically limited in this application.

In a possible implementation, the SRS configuration information includes an SRS resource identifier, for example, an SRS resource ID. One SRS resource identifier corresponds to one group (or one set) of pieces of SRS configuration information. Therefore, the SRS configuration information sent by the first access network device may include a plurality of groups of pieces of SRS configuration information, and each group of pieces of SRS configuration information corresponds to a unique SRS resource identifier.

Optionally, the SRS configuration information further includes at least one of the following: time domain resource configuration information, frequency domain resource configuration information, a number of SRS transmit antenna ports, periodicity information, timing advance (timing advance, TA) information, and the like. The time domain resource configuration information includes a start symbol location, a number of symbols, and the like. The frequency domain resource configuration information includes a frequency domain location, a frequency offset, and the like. The periodicity information indicates a sending periodicity of an SRS. The timing advance information is used by the terminal device to adjust sending time of the terminal device, so that uplink synchronization is established between the terminal device and the access network device.

Optionally, for a manner of sending the SRS configuration information in step S404e, refer to the manner of sending the SRS measurement result in step S404b. Details are not described herein again.

In a possible implementation, in step S404f, the second access network device may store a correspondence between the SRS resource identifier and a terminal device identifier (for example, a cell radio network temporary identifier (cell radio network temporary identifier, C-RNTI)). When the SRS configuration information includes the SRS resource identifier, the second access network device may determine, based on the correspondence, SRS configuration information corresponding to the first-type terminal device, to send, to the first-type terminal device, the SRS configuration information corresponding to the first-type terminal device, so that the first-type terminal device performs step S404a.

Manner 2: The second access network device determines the first load information based on first information. In other words, it may be considered that the first load information is determined based on the first information.

The first information indicates coverage and/or quality information (coverage and/or quality information) of a first cell. For example, the first information may include RSRP, RSRQ, or an SINR.

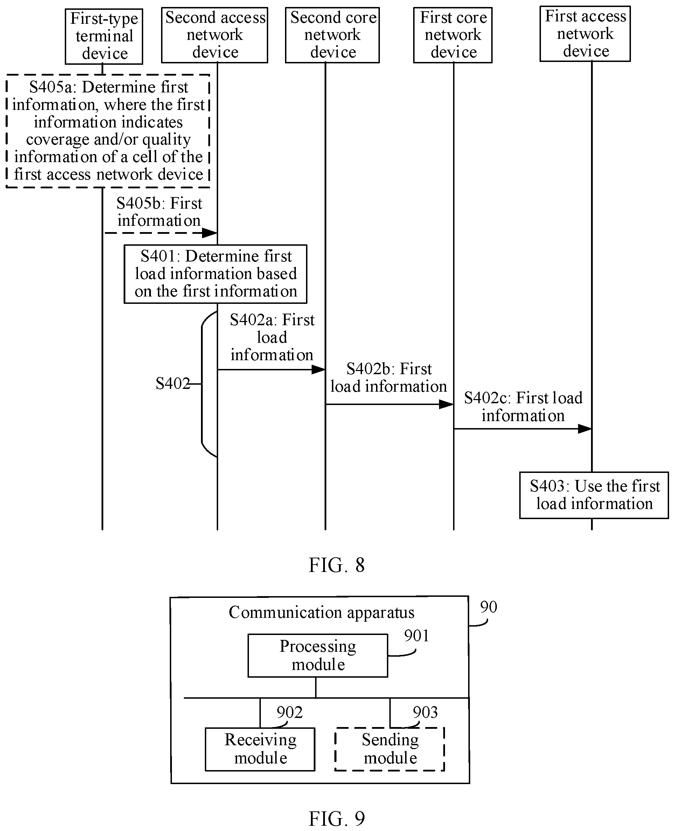

Optionally, the first information is sent by the first-type terminal device to the second access network device. In this scenario, for example, as shown in FIG. 8, before step S401, the method provided in this application further includes the following steps.

S405a: A terminal device determines first information.

The terminal device may be a first-type terminal device.

Optionally, the first information is determined based on location information of the terminal device. For example, the terminal device may determine the first information by using the location information of the terminal device by a first model. For example, the location information of the terminal device is input into the first model to obtain the first information.

For example, the first model may be a machine learning model. The first model may be preconfigured, or may be obtained by the terminal device by performing model training. This is not specifically limited in this application.

S405b: The terminal device sends the first information to a second access network device. Correspondingly, the second access network device receives the first information from the terminal device.

Optionally, the terminal device can send the first information based on a request of the second access network device. For example, before step S405b, the method may further include: The second access network device sends third request information to the terminal device, where the third request information is used to request the first information. Correspondingly, after receiving the third request information, the terminal device sends the first information to the second access network device.

Manner 3: The second access network device determines first load information based on second information. In other words, it may be considered that the first load information is determined based on the second information.

The second information indicates coverage and/or quality information (coverage and/or quality information) of a second cell.

Optionally, the second information may be obtained after the terminal device measures the second cell, and is sent to the second access network device. For example, the second information may include RSRP, RSRQ, or an SINR.

Optionally, the second access network device may determine the first load information by using the second information by a second model and in an artificial intelligence (artificial intelligence, AI) manner. For example, the second information is input into the second model to obtain the first load information.

For example, the second model may be a machine learning model. The second model may be preconfigured, or may be obtained by the second access network device by performing model training. This is not specifically limited in this application.

Based on the foregoing solution, the second access network device may exclude, from the first load information, the load that is in the second cell and that is associated with the terminal device that does not meet the handover condition, to narrow a range of the load information, and provide more precise load information for the first access network device.

The actions implemented by the execution bodies in the foregoing embodiments may be performed by the processor 301 in the communication apparatus shown in FIG. 3 by invoking the computer program or the instructions stored in the memory 303, to indicate the execution bodies to perform the actions.

It may be understood that in the foregoing embodiments, the methods and/or the steps implemented by the access network device may alternatively be implemented by a component (for example, a chip or a circuit) that may be used in the access network device; the methods and/or the steps implemented by the terminal device may alternatively be implemented by a component (for example, a chip or a circuit) that may be used in the terminal device; and the methods and/or the steps implemented by the core network device may alternatively be implemented by a component (for example, a chip or a circuit) that may be used in the core network device.

The foregoing mainly describes the solutions provided in this application from a perspective of interaction between devices. Correspondingly, an embodiment of this application further provides a communication apparatus, and the communication apparatus is configured to implement the foregoing methods. The communication apparatus may be the access network device in the foregoing method embodiments, or an apparatus including the access network device, or a component that may be used in the access network device. Alternatively, the communication apparatus may be the terminal device in the foregoing method embodiments, or an apparatus including the terminal device, or a component that may be used in the terminal device.

It may be understood that, to implement the foregoing functions, the communication apparatus includes a corresponding hardware structure and/or software module for performing the functions. A person skilled in the art should be easily aware that, with reference to units and algorithm steps in the examples described in embodiments disclosed in this specification, this application can be implemented in a form of hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example, and is merely a logical function division. In actual implementation, another division manner may be used.

In an implementation scenario, this application provides a communication apparatus. FIG. 9 is a schematic diagram of a structure of the communication apparatus 90. The communication apparatus 90 includes: a processing module 901 and a receiving module 902.

In some embodiments, the communication apparatus 90 may further include a sending module 903. The sending module 903 and the receiving module 902 may be collectively referred to as a transceiver module.

In some embodiments, the receiving module 902 may also be referred to as a receiving unit. The sending module 903 may also be referred to as a sending unit. The receiving module 902 may include: a receiver circuit, a receiver machine, a receiver, or a communication interface. The sending module 903 may include: a transmitter circuit, a transmitter machine, a transmitter, or a communication interface.

In some embodiments, the communication apparatus 90 may further include a storage module (not shown in FIG. 9), configured to store a computer program or instructions.

In some embodiments, the receiving module 902 may be configured to perform receiving-type steps performed by the first access network device in the foregoing method embodiments, and/or is configured to support another process of the technology described in this specification. The sending module 903 may be configured to perform sending-type steps performed by the first access network device in the foregoing method embodiments, and/or is configured to support another process of the technology described in this specification. The processing module 901 may be configured to perform processing-type steps (for example, determining-type steps and using-type steps) performed by the first access network device in the foregoing method embodiments, and/or is configured to support another process of the technology described in this specification.

In an example, the receiving module 902 is configured to receive first load information from a second access network device, where the first load information indicates load that is in a cell of the second access network device and that is associated with a first-type terminal device; the first-type terminal device has a capability of accessing the communication apparatus and the second access network device; and the communication apparatus and the second access network device belong to different systems.

The processing module 901 is configured to use the first load information.

In a possible implementation, the sending module 903 is further configured to send first request information to the second access network device, where the first request information is used to request the second access network device to send load information.

In a possible implementation, the processing module 901 is further configured to measure a sounding reference signal SRS sent by the first-type terminal device, to obtain an SRS measurement result. The sending module 903 is further configured to send the SRS measurement result to the second access network device.

In a possible implementation, the receiving module 902 is further configured to receive second request information from the second access network device, where the second request information is used to request SRS configuration information. The sending module 903 is further configured to send the SRS configuration information to the second access network device.

In a possible implementation, that the processing module 901 is configured to use the first load information includes: The processing module 901 is configured to determine, based on the first load information, whether to perform load balancing.

In a possible implementation, that the processing module 901 is configured to determine, based on the first load information, whether to perform load balancing includes: The processing module 901 is configured to determine, based on the first load information, whether to perform load balancing on a cell of the communication apparatus.

In a possible implementation, that the processing module 901 is configured to perform load balancing on a cell of the communication apparatus includes: In a possible implementation, the processing module 901 is configured to initiate a handover of a first-type terminal device in the cell of the communication apparatus, and/or the processing module 901 is configured to request to adjust a handover parameter and/or a reselection parameter of the cell of the second access network device.

In a possible implementation, that the processing module 901 is configured to use the first load information includes: The processing module 901 is configured to determine, based on the first load information, whether to perform an energy saving operation.

In a possible implementation, that the processing module 901 is configured to determine, based on the first load information, whether to perform an energy saving operation includes: The processing module 901 is configured to determine, based on the first load information, whether to switch on or switch off the cell of the communication apparatus.

In a possible implementation, that the processing module 901 is configured to determine, based on the first load information, whether to switch on or switch off the cell of the communication apparatus includes: The processing module 901 is configured to determine, when the load indicated by the first load information is greater than or equal to a first threshold, to switch on the cell of the communication apparatus; or the processing module 901 is configured to determine, when the load indicated by the first load information is less than or equal to a second threshold, to switch off the cell of the communication apparatus.

In a possible implementation, the receiving module 902 is further configured to receive second load information, where the second load information indicates load that is in a cell of a third access network device and that is associated with the first-type terminal device. That the processing module 901 is configured to determine, based on the first load information, whether to switch on or switch off the cell of the communication apparatus includes: The processing module 901 is configured to: when a sum of the load indicated by the first load information and the load indicated by the second load information is greater than or equal to a third threshold, determine to switch on the cell of the communication apparatus; or the processing module 901 is configured to: when a sum of the load indicated by the first load information and the load indicated by the second load information is less than or equal to a fourth threshold, determine to switch off the cell of the communication apparatus.

All related content of the steps in the foregoing method embodiments may be cited in function descriptions of the corresponding functional modules. Details are not described herein again.

In this application, the communication apparatus 90 is presented in a form of functional modules obtained through division in an integrated manner. The "module" herein may be an application-specific integrated circuit (application-specific integrated circuit, ASIC), a circuit, a processor and a memory that execute one or more software or firmware programs, an integrated logic circuit, and/or another device that can provide the foregoing functions.

In some embodiments, in hardware implementation, a person skilled in the art may figure out that the communication apparatus 90 may be in a form of the communication apparatus 300 shown in FIG. 3.

In an example, functions/implementation processes of the processing module 901 in FIG. 9 may be implemented by using the processor 301 in the communication apparatus 300 shown in FIG. 3 by invoking the computer-executable instructions stored in the memory 303, and functions/implementation processes of the receiving module 902 and the sending module 903 in FIG. 9 may be implemented by using the communication interface 304 in the communication apparatus 300 shown in FIG. 3.

In some embodiments, when the communication apparatus 90 in FIG. 9 is a chip or a chip system, functions/implementation processes of the receiving module 902 and the sending module 903 may be implemented by using an input/output interface (or a communication interface) of the chip or the chip system, and functions/implementation processes of the processing module 901 may be implemented by using a processor (or a processing circuit) of the chip or the chip system.

Because the communication apparatus 90 provided in this embodiment may perform the foregoing methods, for technical effects that can be achieved by the communication apparatus 90, refer to the foregoing method embodiments. Details are not described herein again.

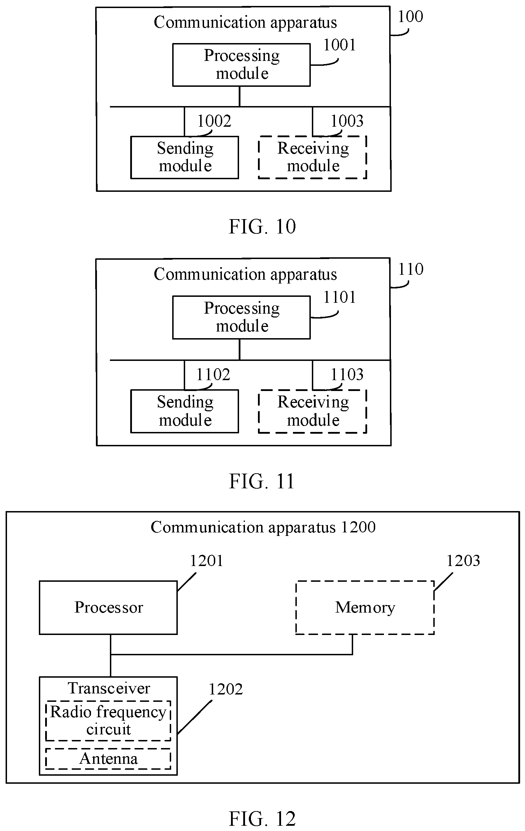

In an implementation scenario, this application provides a communication apparatus. FIG. 10 is a schematic diagram of a structure of the communication apparatus 100. The communication apparatus 100 includes: a processing module 1001 and a sending module 1002.

In some embodiments, the communication apparatus 100 may further include a receiving module 1003. The receiving module 1003 and the sending module 1002 may be collectively referred to as a transceiver module.

In some embodiments, the receiving module 1003 may also be referred to as a receiving unit. The sending module 1002 may also be referred to as a sending unit. The receiving module 1003 may include: a receiver circuit, a receiver machine, a receiver, or a communication interface. The sending module 1002 may include: a transmitter circuit, a transmitter machine, a transmitter, or a communication interface.

In some embodiments, the communication apparatus 100 may further include a storage module (not shown in FIG. 10), configured to store a computer program or instructions.

In some embodiments, the sending module 1002 may be configured to perform sending-type steps performed by the second access network device in the foregoing method embodiments, and/or is configured to support another process of the technology described in this specification. The receiving module 1003 may be configured to perform receiving-type steps performed by the second access network device in the foregoing method embodiments, and/or is configured to support another process of the technology described in this specification. The processing module 1001 may be configured to perform processing-type steps (for example, determining-type steps) performed by the second access network device in the foregoing method embodiments, and/or is configured to support another process of the technology described in this specification.

In an example, the processing module 1001 is configured to determine first load information, where the first load information indicates load that is in a cell of the communication apparatus and that is associated with a first-type terminal device; the first-type terminal device has a capability of accessing a first access network device and the communication apparatus; and the first access network device and the communication apparatus belong to different systems.

The sending module 1002 is configured to send the first load information to the first access network device.

In a possible implementation, the receiving module 1003 is further configured to receive first request information from the first access network device, where the first request information is used to request the communication apparatus to send load information.

In a possible implementation, the receiving module 1003 is further configured to receive a sounding reference signal SRS measurement result from the first access network device, and the first load information is determined based on the SRS measurement result.

In a possible implementation, the sending module 1002 is further configured to send second request information to the first access network device, where the second request information is used to request SRS configuration information. The receiving module 1003 is further configured to receive the SRS configuration information from the first access network device. The sending module 1002 is further configured to send the SRS configuration information to the first-type terminal device.

In a possible implementation, the receiving module 1003 is further configured to receive first information from the first-type terminal device, where the first information indicates coverage and/or quality information of a cell of the first access network device; and the first load information is determined based on the first information.

All related content of the steps in the foregoing method embodiments may be cited in function descriptions of the corresponding functional modules. Details are not described herein again.

In this application, the communication apparatus 100 is presented in a form of functional modules obtained through division in an integrated manner. The "module" herein may be an application-specific integrated circuit (application-specific integrated circuit, ASIC), a circuit, a processor and a memory that execute one or more software or firmware programs, an integrated logic circuit, and/or another device that can provide the foregoing functions.

In some embodiments, in hardware implementation, a person skilled in the art may figure out that the communication apparatus 100 may be in a form of the communication apparatus 300 shown in FIG. 3.

In an example, functions/implementation processes of the processing module 1001 in FIG. 10 may be implemented by using the processor 301 in the communication apparatus 300 shown in FIG. 3 by invoking the computer-executable instructions stored in the memory 303, and functions/implementation processes of the receiving module 1003 and the sending module 1002 in FIG. 10 may be implemented by using the communication interface 304 in the communication apparatus 300 shown in FIG. 3.

In some embodiments, when the communication apparatus 100 in FIG. 10 is a chip or a chip system, functions/implementation processes of the sending module 1002 and the receiving module 1003 may be implemented by using an input/output interface (or a communication interface) of the chip or the chip system, and functions/implementation processes of the processing module 1001 may be implemented by using a processor (or a processing circuit) of the chip or the chip system.

Because the communication apparatus 100 provided in this embodiment may perform the foregoing methods, for technical effects that can be achieved by the communication apparatus 100, refer to the foregoing method embodiments. Details are not described herein again.

In an implementation scenario, this application provides a communication apparatus. FIG. 11 is a schematic diagram of a structure of the communication apparatus 110. The communication apparatus 110 includes: a processing module 1101 and a sending module 1102.

In some embodiments, the communication apparatus 110 may further include a receiving module 1103. The receiving module 1103 and the sending module 1102 may be collectively referred to as a transceiver module.

In some embodiments, the receiving module 1103 may also be referred to as a receiving unit. The sending module 1102 may also be referred to as a sending unit. The receiving module 1103 may include: a receiver circuit, a receiver machine, a receiver, or a communication interface. The sending module 1102 may include: a transmitter circuit, a transmitter machine, a transmitter, or a communication interface.

In some embodiments, the communication apparatus 110 may further include a storage module (not shown in FIG. 11), configured to store a computer program or instructions.

In some embodiments, the sending module 1102 may be configured to perform sending-type steps performed by the terminal device in the foregoing method embodiments, and/or is configured to support another process of the technology described in this specification. The receiving module 1103 is configured to perform receiving-type steps performed by the terminal device in the foregoing method embodiments, and/or is configured to support another process of the technology described in this specification. The processing module 1101 may be configured to perform processing-type steps (for example, determining-type steps) performed by the terminal device in the foregoing method embodiments, and/or is configured to support another process of the technology described in this specification.

In an example, the processing module 1101 is configured to determine first information, where the first information indicates coverage and/or quality information of a cell of a first access network device.

The sending module 1102 is configured to send the first information to a second access network device, where the first access network device and the second access network device belong to different systems, and the communication apparatus has a capability of accessing the first access network device and the second access network device.

In a possible implementation, the receiving module 1103 is further configured to receive third request information from the second access network device, where the third request information is used to request the first information.

All related content of the steps in the foregoing method embodiments may be cited in function descriptions of the corresponding functional modules. Details are not described herein again.

In this application, the communication apparatus 110 is presented in a form of functional modules obtained through division in an integrated manner. The "module" herein may be an application-specific integrated circuit (application-specific integrated circuit, ASIC), a circuit, a processor and a memory that execute one or more software or firmware programs, an integrated logic circuit, and/or another device that can provide the foregoing functions.

In some embodiments, in hardware implementation, a person skilled in the art may figure out that the communication apparatus 110 may be in a form of the communication apparatus 300 shown in FIG. 3.

In an example, functions/implementation processes of the processing module 1101 in FIG. 11 may be implemented by using the processor 301 in the communication apparatus 300 shown in FIG. 3 by invoking the computer-executable instructions stored in the memory 303, and functions/implementation processes of the sending module 1102 and the receiving module 1103 in FIG. 11 may be implemented by using the communication interface 304 in the communication apparatus 300 shown in FIG. 3.

In some embodiments, when the communication apparatus 110 in FIG. 11 is a chip or a chip system, functions/implementation processes of the sending module 1102 and the receiving module 1103 may be implemented by using an input/output interface (or a communication interface) of the chip or the chip system, and functions/implementation processes of the processing module 1101 may be implemented by using a processor (or a processing circuit) of the chip or the chip system.

Because the communication apparatus 110 provided in this embodiment may perform the foregoing methods, for technical effects that can be achieved by the communication apparatus 110, refer to the foregoing method embodiments. Details are not described herein again.

In a possible product form, the terminal device and the network device in embodiments of this application may be further implemented by using the following: one or more field programmable gate arrays (field programmable gate arrays, FPGAs), a programmable logic device (programmable logic device, PLD), a controller, a state machine, gate logic, a discrete hardware component, any other proper circuit, or any combination of circuits that can perform various functions described in this application.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program or necessary instructions. The processor may invoke the computer program or the instructions stored in the memory, to indicate the communication apparatus to perform the method in any one of the foregoing method embodiments. Certainly, the communication apparatus may not include a memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read via another device) and transmit the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is the chip system, the chip system may include a chip, or may include a chip and another discrete device. This is not specifically limited in this embodiment of this application.

In some embodiments, an embodiment of this application further provides a communication apparatus. The communication apparatus includes an interface circuit and a logic circuit. The interface circuit is configured to obtain input information and/or output information. The logic circuit is configured to perform the method in any one of the foregoing method embodiments, to process input information and/or generate output information.

In a possible implementation, when the communication apparatus is configured to implement a function of the foregoing first access network device, in some possible designs, the input information is first load information, and the first load information indicates load that is in a cell of a second access network device and that is associated with a first-type terminal device. The processing input information includes: using the first load information.

In some possible designs, the output information is first request information, and the first request information is used to request the second access network device to send the load information.

In some possible designs, the output information is an SRS measurement result, and the SRS measurement result is obtained by measuring an SRS sent by the first-type terminal device.

In some possible designs, the input information is second request information, and the second request information is used to request SRS configuration information.

In a possible implementation, when the communication apparatus is configured to implement a function of the foregoing second access network device, in some possible designs, the output information is first load information, and the first load information indicates load that is in a cell of a second access network device and that is associated with a first-type terminal device.

In some possible designs, the input information is first request information, and the first request information is used to request the second access network device to send the load information.

In some possible designs, the input information is an SRS measurement result. The processing input information includes: determining first load information based on the SRS measurement result.

In some possible designs, the output information is second request information, and the second request information is used to request SRS configuration information.

In some possible designs, the input information is first information, and the first information indicates coverage and/or quality information of a cell of the first access network device. The processing input information includes: determining first load information based on the first information.

In a possible implementation, when the communication apparatus is configured to implement a function of the foregoing terminal device, in some possible designs, the output information is first information, and the first information indicates coverage and/or quality information of a cell of the first access network device.

In some possible designs, the input information is third request information, and the third request information is used to request the first information.

In a possible product form, the network device and the terminal device in embodiments of this application may be implemented by using a general bus architecture.

For ease of description, FIG. 12 is a schematic diagram of a structure of a communication apparatus 1200 according to an embodiment of this application. The communication apparatus 1200 includes a processor 1201 and a transceiver 1202. The communication apparatus 1200 may be a network device, a terminal device, or a chip in a network device or a terminal device. FIG. 12 shows only main components of the communication apparatus 1200. In addition to the processor 1201 and the transceiver 1202, the communication apparatus may further include a memory 1203 and an input/output apparatus (not shown in the figure).

The processor 1201 is mainly configured to: process a communication protocol and communication data, control the entire communication apparatus, execute a software program, and process data of the software program. The memory 1203 is mainly configured to store the software program and the data. The transceiver 1202 may include a radio frequency circuit and an antenna. The radio frequency circuit is mainly configured to perform conversion between a baseband signal and a radio frequency signal and process a radio frequency signal. The antenna is mainly configured to receive/send a radio frequency signal in a form of an electromagnetic wave. The input/output apparatus, such as a touchscreen, a display, or a keyboard, is mainly configured to: receive data input by a user and output data to the user.

The processor 1201, the transceiver 1202, and the memory 1203 may be connected through a communication bus.

After the communication apparatus is powered on, the processor 1201 may read the software program in the memory 1203, interpret and execute instructions of the software program, and process data of the software program. When data needs to be sent in a wireless manner, the processor 1201 performs baseband processing on the to-be-sent data, and then outputs a baseband signal to a radio frequency circuit. The radio frequency circuit performs radio frequency processing on the baseband signal, and then sends a radio frequency signal through the antenna in an electromagnetic wave form. When data is sent to the communication apparatus, the radio frequency circuit receives a radio frequency signal through the antenna, converts the radio frequency signal into a baseband signal, and outputs the baseband signal to the processor 1201. The processor 1201 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely independent of the communication apparatus.

This application further provides a computer-readable storage medium, where the computer-readable storage medium stores a computer program or instructions, and when the computer program or the instructions are executed by a processor, a function in any one of the foregoing method embodiments is implemented.

This application further provides a computer program product. When the computer program product is executed by a processor, a function in any one of the foregoing method embodiments is implemented.

A person of ordinary skill in the art may understand that, for the purpose of convenient and brief description, for a detailed working process of the foregoing system, apparatuses, and units, refer to a corresponding process in the foregoing method embodiments. Details are not described herein again.

It may be understood that the system, the apparatus, and the method described in this application may alternatively be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separated, this is, may be located in one place or may be distributed on a plurality of network units. Components displayed as units may be or may not be physical units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

All or some of the foregoing embodiments may be implemented by software, hardware, firmware, or any combination thereof. When a software program is used to implement embodiments, the embodiments may be implemented completely or partially in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state-drive, SSD)), or the like. In embodiments of this application, the computer may include the apparatus described above.

Although this application is described with reference to embodiments, in a process of implementing this application that claims protection, a person skilled in the art may understand and implement another variation of the disclosed embodiments by viewing the accompanying drawings, disclosed content, and appended claims. In the claims, the word "including" (including) does not exclude another component or another step, and "a" or "one" does not exclude a case of plurality. A single processor or another unit may implement several functions enumerated in the claims. Some measures are recorded in dependent claims that are different from each other, but this does not mean that these measures cannot be combined to produce a great effect.

Although this application is described with reference to specific features and the embodiments thereof, it is clear that various modifications and combinations may be made to them without departing from the spirit and scope of this application. Correspondingly, the specification and accompanying drawings are merely example descriptions of this application defined by the appended claims, and are considered as any of or all modifications, variations, combinations or equivalents that cover the scope of this application. It is clear that a person skilled in the art can make various modifications and variations to this application without departing from the spirit and scope of this application. In this way, if these modifications and variations to this application fall within the scope of the claims of this application and their equivalent technologies, this application is also intended to cover these modifications and variations.

## Claims

1. A communication method, wherein the method comprises:
receiving, by a first access network device, first load information from a second access network device, wherein the first load information indicates load that is in a cell of the second access network device and that is associated with a first-type terminal device; the first-type terminal device has a capability of accessing the first access network device and the second access network device; and the first access network device and the second access network device belong to different systems; and
using, by the first access network device, the first load information.

2. The method according to claim 1, wherein the first load information includes at least one of the following:
a number of active first-type terminal devices, radio resource control RRC connections, a transport layer capacity indicator, a composite available capacity group, a slice available capacity, or a radio resource status.

3. The method according to claim 1 or 2, wherein the method further comprises:
sending, by the first access network device, first request information to the second access network device, wherein the first request information is for requesting the second access network device to send load information.

4. The method according to claim 3, wherein the first request information includes at least one of the following:
a load type, periodicity information, or information about a threshold that corresponds to the load information, wherein the periodicity information indicates a periodicity in which the second access network device sends the load information, and the load indicated by the load information is greater than or equal to the threshold.

5. The method according to any one of claims 1 to 4, wherein the using, by the first access network device, the first load information includes:
determining, by the first access network device based on the first load information, whether to perform an energy saving operation.

6. The method according to any one of claims 1 to 4, wherein the using, by the first access network device, the first load information includes:
determining, by the first access network device based on the first load information, whether to perform load balancing.

7. The method according to any one of claims 1 to 6, wherein the first-type terminal device is a terminal device that meets a handover condition in the cell of the second access network device.

8. The method according to claim 7, wherein the method further comprises:
measuring, by the first access network device, a sounding reference signal SRS sent by the first-type terminal device, to obtain an SRS measurement result; and
sending, by the first access network device, the SRS measurement result to the second access network device.

9. The method according to claim 8, wherein the method further comprises:
receiving, by the first access network device, second request information from the second access network device, wherein the second request information is used to request SRS configuration information; and
sending, by the first access network device, the SRS configuration information to the second access network device.

10. The method according to any one of claims 1 to 9, wherein the first access network device is an access network device in a 5th generation 5G system, and the second access network device is an access network device in a 4th generation 4G system.

11. A communication method, wherein the method comprises:
determining, by a second access network device, first load information, wherein the first load information indicates load that is in a cell of the second access network device and that is associated with a first-type terminal device; the first-type terminal device has a capability of accessing a first access network device and the second access network device; and the first access network device and the second access network device belong to different systems; and
sending, by the second access network device, the first load information to the first access network device.

12. The method according to claim 11, wherein the method further comprises:
receiving, by the second access network device, first information from the first-type terminal device, wherein the first information indicates coverage and/or quality information of a cell of the first access network device; and the first load information is determined based on the first information.

13. The method according to claim 11, wherein the first load information is determined based on second information, and the second information indicates coverage and/or quality information of the cell of the second access network device.

14. A communication apparatus, comprising: a receiving module and a processing module, wherein
the receiving module is configured to receive first load information from a second access network device, wherein the first load information indicates load that is in a cell of the second access network device and that is associated with a first-type terminal device; the first-type terminal device has a capability of accessing the communication apparatus and the second access network device; and the communication apparatus and the second access network device belong to different systems; and
the processing module is configured to use the first load information.

15. The communication apparatus according to claim 14, wherein the first load information includes at least one of the following:
a number of active first-type terminal devices, radio resource control RRC connections, a transport layer capacity indicator, a composite available capacity group, a slice available capacity, or a radio resource status.

16. The communication apparatus according to claim 14 or 15, wherein the communication apparatus further comprises a sending module; and
the sending module is further configured to send first request information to the second access network device, wherein the first request information is used to request the second access network device to send load information.

17. The communication apparatus according to claim 16, wherein the first request information includes at least one of the following:
a load type, periodicity information, or information about a threshold that corresponds to the load information, wherein the periodicity information indicates a periodicity in which the second access network device sends the load information, and the load indicated by the load information is greater than or equal to the threshold.

18. The communication apparatus according to any one of claims 14 to 17, wherein that the processing module is configured to use the first load information includes:
the processing module is configured to determine, based on the first load information, whether to perform an energy saving operation.

19. The communication apparatus according to any one of claims 14 to 17, wherein that the processing module is configured to use the first load information includes:
the processing module is configured to determine, based on the first load information, whether to perform load balancing.

20. The communication apparatus according to any one of claims 14 to 19, wherein the first-type terminal device is a terminal device that meets a handover condition in the cell of the second access network device.

21. The communication apparatus according to claim 20, wherein the communication apparatus further comprises a sending module;
the processing module is further configured to measure a sounding reference signal SRS sent by the first-type terminal device, to obtain an SRS measurement result; and
the sending module is further configured to send the SRS measurement result to the second access network device.

22. The communication apparatus according to claim 21, wherein the receiving module is further configured to receive second request information from the second access network device, wherein the second request information is used to request SRS configuration information; and
the sending module is further configured to send the SRS configuration information to the second access network device.

23. A communication apparatus, comprising: a sending module and a processing module, wherein
the processing module is configured to determine first load information, wherein the first load information indicates load that is in a cell of the communication apparatus and that is associated with a first-type terminal device; the first-type terminal device has a capability of accessing a first access network device and the communication apparatus; and the first access network device and the communication apparatus belong to different systems; and
the sending module is configured to send the first load information to the first access network device.

24. The communication apparatus according to claim 23, wherein the communication apparatus further comprises a receiving module; and
the receiving module is configured to receive first information from the first-type terminal device, wherein the first information indicates coverage and/or quality information of a cell of the first access network device; and the first load information is determined based on the first information.

25. The communication apparatus according to claim 23, wherein the first load information is determined based on second information, and the second information indicates coverage and/or quality information of a cell of the second access network device.

26. A communication apparatus, comprising a processor, wherein
the processor is configured to read a program from a memory and run the program, to implement the method according to any one of claims 1 to 10, or implement the method according to any one of claims 11 to 13.

27. A computer-readable storage medium, wherein the computer-readable storage medium stores instructions, and when the instructions are run on a computer, the method according to any one of claims 1 to 10 is implemented, or the method according to any one of claims 11 to 13 is implemented.

28. A computer program product, wherein when the computer program product runs on a communication apparatus, the method according to any one of claims 1 to 10 is implemented, or the method according to any one of claims 11 to 13 is implemented.
